(19) Europäisches Patentamt / European Patent Office / Office européen des brevets

(11) **EP 1 856 870 B1**

(12) **FASCICULE DE BREVET EUROPEEN**

(45) Date de publication et mention de la délivrance du brevet:
**08.04.2015 Bulletin 2015/15**

(21) Numéro de dépôt: **05780096.3**

(22) Date de dépôt: **08.03.2005**

(51) Int Cl.:
*H04L 25/06* *(2006.01)*     *H04L 5/02* *(2006.01)*

(86) Numéro de dépôt international:
**PCT/FR2005/050149**

(87) Numéro de publication internationale:
**WO 2006/095061 (14.09.2006 Gazette 2006/37)**

(54) **PROCEDE DE DEMODULATION SOUPLE DE SYMBOLES COMPLEXES ESTIMES**

VERFAHREN ZUR WEICHEN DEMODULATION GESCHÄTZTER KOMPLEXER SYMBOLE

METHOD FOR SOFT DEMODULATION OF ESTIMATED COMPLEX SYMBOLS

(84) Etats contractants désignés:
**AT BE BG CH CY CZ DE DK EE ES FI FR GB GR HU IE IS IT LI LT LU MC NL PL PT RO SE SI SK TR**

(43) Date de publication de la demande:
**21.11.2007 Bulletin 2007/47**

(73) Titulaire: **Commissariat à l'Énergie Atomique et aux Énergies Alternatives**
**75015 Paris (FR)**

(72) Inventeurs:
• **KTENAS, Dimitri**
  **F-38600 Fontaine (FR)**
• **BOUVIER DES NOES, Mathieu**
  **F-38000 Grenoble (FR)**
• **BARLETTA, Julien**
  **F-38000 Grenoble (FR)**
• **GUYON, Claire**
  **F-38700 La Tronche (FR)**

(74) Mandataire: **Ahner, Philippe et al**
**BREVALEX**
**95, rue d'Amsterdam**
**75378 Paris Cedex 8 (FR)**

(56) Documents cités:
• **CHAUFRAY J -M; HACHEM W; LOUBATON P: "Asymptotic analysis of optimum and suboptimum CDMA downlink MMSE receivers" IEEE TRANSACTIONS ON INFORMATION THEORY, vol. 50, no. 11, novembre 2004 (2004-11), pages 2620-2638, XP002352409 cité dans la demande**
• **TOSATO F ET AL: "Simplified soft-output demapper for binary interleaved COFDM with application to HIPERLAN/2" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY : IEEE, US, vol. VOL. 1 OF 5, 28 avril 2002 (2002-04-28), pages 664-668, XP010589578 ISBN: 0-7803-7400-2 cité dans la demande**
• **KAISER S: "OFDM CODE-DIVISION MULTIPLEXING IN FADING CHANNELS" IEEE TRANSACTIONS ON COMMUNICATIONS, IEEE SERVICE CENTER, PISCATAWAY, NJ, US, vol. 50, no. 8, août 2002 (2002-08), pages 1266-1273, XP001125116 ISSN: 0090-6778**

**Description**

Domaine technique et art antérieur

La présente invention concerne un procédé de démodulation souple de symboles complexes estimés et un procédé de décodage de symboles complexes estimés comprenant une démodulation souple selon l'invention.

L'invention trouve une application dans les systèmes de transmission qui mettent en oeuvre la technique d'accès multiple par répartition de codes (AMRC) également appelée technique CDMA (CDMA pour « Code Division Multiple Access »).

Les symboles complexes estimés sont des données traitées dans les récepteurs AMRC. Ils correspondent à des symboles complexes émis par des émetteur AMRC et constitués de données binaires codées par codage convolutif et modulées en quadrature selon une modulation MAQ-M, M étant un nombre entier égal à $2^m$, m étant un nombre entier supérieur ou égal à 1.

Le codage convolutif associe un bloc de B bits codés à un bloc de A bits d'information (B>A), les B bits codés étant fonction des A bits d'information et de l'état du codeur.

Une représentation connue de codeur convolutif est la représentation en treillis. Le treillis est formé d'un ensemble de noeuds reliés par des branches. Les noeuds représentent les différents états du codeur et les branches représentent les différentes transitions possibles d'un noeud à l'autre. Un treillis comprend $2^v$ noeuds, où v est la mémoire du codeur qui est égale à la longueur de contrainte du code minorée de 1.

Un algorithme couramment utilisé pour le décodage de données binaires codées par codage convolutif est l'algorithme de Viterbi. Le décodage consiste alors à rechercher, dans le treillis, le chemin qui correspond à la séquence la plus probable, c'est-à-dire la séquence qui est à la distance minimale de la séquence reçue. L'algorithme de Viterbi permet ainsi de retrouver une séquence de bits émise à partir d'une séquence complète de bits reçue.

Un avantage de l'algorithme de Viterbi est d'utiliser des valeurs souples ou métriques à l'entrée du décodeur. Par valeur souple, il faut entendre une valeur qui n'est pas une valeur binaire dure telle qu'un « 0 » ou un « 1 ». La métrique optimale à fournir en entrée du décodeur de Viterbi est ainsi donnée par le Logarithme du Rapport de Vraisemblance également connu sous l'appellation LRV.

Le LRV mesure la probabilité qu'un bit en entrée du décodeur soit, après démodulation, un « 0 » ou un « 1 ». Dans le cas de la modulation d'amplitude en quadrature (modulation MAQ également appelée modulation QAM (QAM pour « Quadrature Amplitude Modulation »), le LRV est une valeur souple associée à chacun des bits d'un symbole complexe MAQ, et ceci de manière indépendante pour les bits d'un même symbole MAQ reçu. Le signal reçu est alors démodulé en un bit souple dont le signe correspond au bit fourni par un détecteur à décision dure et dont la valeur absolue indique la fiabilité de la décision du module de démodulation en quadrature.

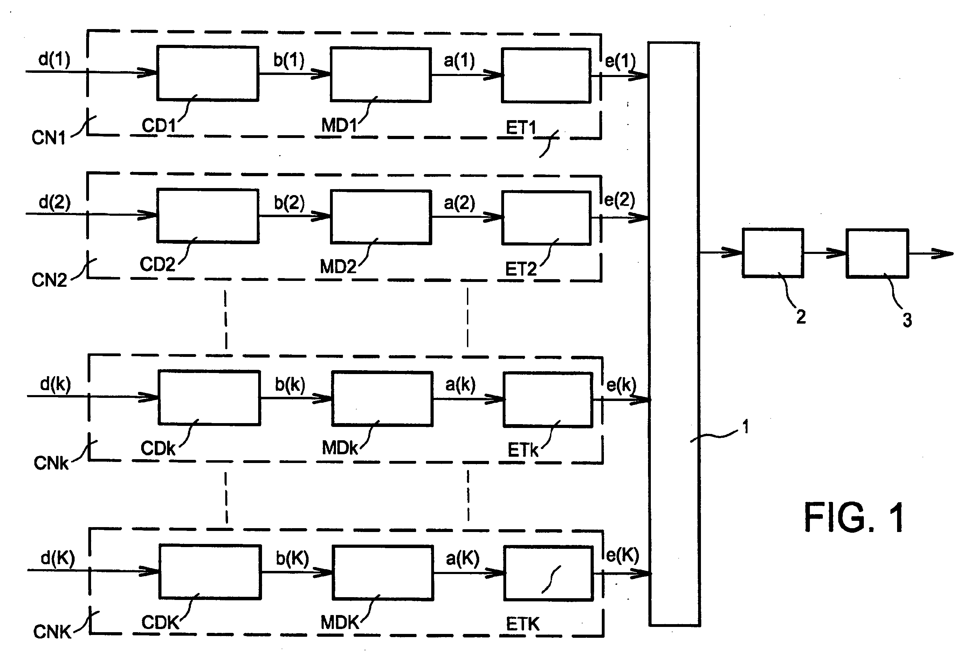

Un émetteur AMRC à porteuses multiples selon l'art antérieur, également connu sous la dénomination émetteur MC-CDMA (MC-CDMA pour « Multi-Carrier Code Division Multiple Access ») est représenté en Figure 1.

L'émetteur MC-CDMA comprend K canaux utilisateur CNk (k=1, 2, ..., K), un additionneur 1, un circuit de conversion série/parallèle 2 et un circuit de multiplexage par répartition orthogonale de fréquence 3.

Le canal CNk associé à l'utilisateur de rang k (k=1, 2, ..., K) comprend un codeur de canal CDk, un modulateur MDk et un circuit d'étalement de spectre ETk. Le codeur de canal CDk comprend un codeur convolutif, un poinçonneur et un circuit d'entrelacement de bit montés en série. Le poinçonneur permet l'obtention du rendement de codage souhaité pour l'application et le circuit d'entrelacement de bit évite les paquets d'erreur à la réception.

Une succession de trains binaires d'information d(k) sont appliqués en entrée du codeur de canal CDk. Les données d'un train binaire d(k) sont alors codées et le codeur de canal CDk délivre un train binaire codé b(k) qui est transmis au modulateur MDk. Le modulateur MDk délivre un symbole complexe MAQ-M (M-QAM en langue anglaise) a(k), M correspondant au nombre d'états du symbole complexe a(k).

Comme cela est connu de l'homme de l'art, les M états du symbole complexe a(k) peuvent se représenter par une constellation de M points dans le plan complexe (I, Q), l'axe I étant un axe de signal en phase et l'axe Q un axe de signal en quadrature. Le symbole complexe émis a(k) s'écrit :

$$a(k) = a_I(k) + j\, a_Q(k)$$

où $a_I(k)$ et $a_Q(k)$ sont les composantes de a(k), respectivement selon l'axe I et selon l'axe Q.

Dans le cas, par exemple, où $M = 2^{2m}$, la constellation, ou ensemble des états dans le plan complexe (I, Q), est une constellation MAQ carrée pour laquelle la séquence binaire codée b(k) s'écrit :

(bI, 1, ..., bI, q, ..., bI, m ; bQ, 1, ..., bQ, p, ..., bQ, m),

où le bit codé bI, q est le $q^{ième}$ bit de la partie en phase du signal (selon l'axe I) et le bit codé bQ,p est le $p^{ième}$ bit de la partie en quadrature du signal (selon l'axe Q).

Le symbole complexe a(k) de l'utilisateur de rang k est ensuite étalé par un code d'étalement propre au circuit d'étalement ETk de rang k. Les symboles étalés e(k) délivrés par les différents circuits d'étalement sont sommés dans l'additionneur 1. Le signal délivré par l'additionneur 1 est ensuite transmis au circuit de conversion série/parallèle 2 et les signaux délivrés en parallèle par le circuit 2 sont transmis au circuit de multiplexage par répartition orthogonale de fréquence 3. Le circuit 3 opère une Transformée de Fourier Rapide Inverse TFRI (IFFT en langue anglaise).

Dans le cas présent, il est supposé que les symboles MC-CDMA obtenus après l'opération de TFRI sont séparés par un intervalle de garde suffisamment long pour supprimer l'interférence entre les symboles communément désignée « interférence IES » (IES pour « Interférence Entre Symboles »). A cette fin, le circuit 3 introduit un intervalle de garde (IG) sous la forme d'un préfixe cyclique entre deux symboles consécutifs. La nature cyclique de l'intervalle de garde permet avantageusement une représentation du canal de propagation simplifiée dans le domaine fréquentiel. L'usage d'un préfixe cyclique est courant et spécifique aux systèmes multi-porteuses à multiplexage par répartition orthogonale de fréquence ou systèmes OFDM (OFDM pour « Orthogonal Frequency Division Multiplexing »).

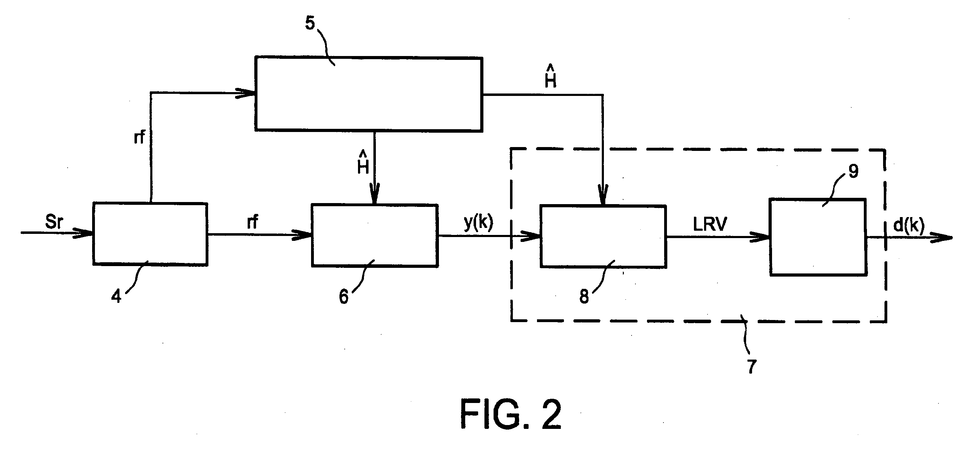

La Figure 2 représente une structure de réception correspondant à la structure d'émission de la figure 1.

La structure de réception comprend un premier circuit de traitement 4, un circuit d'estimation de canal 5, un détecteur mono ou multi-utilisateurs 6 et une unité de décodage 7 constituée d'un démodulateur 8 qui met en oeuvre une démodulation souple et d'un décodeur canal à entrées souples 9.

Le circuit de traitement 4 opère la suppression du préfixe cyclique dans le signal reçu Sr et effectue une Transformée de Fourier Rapide ou transformée FFT (FFT pour « Fast Fourier Transform ») sur le signal Sr. Le signal fréquentiel rf délivré par le circuit de traitement 4 sert à réaliser l'estimation de canal pour chaque sous-porteuse à l'aide du circuit d'estimation de canal 5. Les valeurs estimées H délivrées par le circuit d'estimation de canal 5 sont ensuite utilisées, conjointement avec les codes d'étalement, pour réaliser une détection linéaire des symboles reçus, également appelée égalisation linéaire, dans le détecteur 6.

Le signal rf délivré par le circuit de traitement 4 s'écrit :

$$\text{rf} = \text{H} \quad \text{C} \sqrt{P} \quad \text{a} + \text{n} \qquad (1),$$

où

- n est un vecteur de bruit de dimension N x l contenant les échantillons de bruit complexe gaussien de variance $\sigma^2$, N étant le nombre de sous-porteuses contenues dans le signal rf,
- H est une matrice diagonale de dimension N x N représentant le canal, le coefficient diagonal pour la $i^{ème}$ sous-porteuse s'écrivant :

$$H(i) = h(e^{j2\pi i/N}) \qquad (2),$$

- P est une matrice diagonale de dimension K x K contenant les puissances appliquées à chacun des K codes d'étalement,
- a est le vecteur de symboles transmis de dimension Nxl, et
- C est la matrice des codes d'étalement de dimension NxK.

Dans le cas, par exemple, d'une détection mono-utilisateur, une détection linéaire suivie d'un désétalement par le code $C_k$ de l'utilisateur k est appliquée sur le signal rf afin de fournir le symbole complexe estimé y(k) correspondant au symbole complexe émis a(k) pour l'utilisateur k. Il vient :

$$y(k) = c_k^H g_k^H \text{rf} \qquad (3),$$

où $C_k$ et $g_k$ sont, respectivement, le vecteur colonne de rang k (pour l'utilisateur de rang k) de la matrice C des codes d'étalement et la matrice d'égalisation de l'utilisateur de rang k, l'exposant H représentant l'opération hermitienne.

Le détecteur ou égaliseur mono ou multi-utilisateur(s) 6 a pour but de remettre en forme le signal reçu pour qu'il corresponde au mieux aux points d'une constellation de référence conforme à la constellation initiale. En présence de bruit (bruit thermique et/ou bruit d'accès multiple), les points retrouvés ne coïncident pas avec la constellation de référence. C'est pourquoi une démodulation souple en quadrature I/Q est réalisée après l'égalisation et avant le décodage du signal.

L'opération de décodage consiste à retrouver les valeurs binaires émises d(k) à partir des symboles complexes y(k) issus du détecteur linéaire. Le démodulateur 8 met en oeuvre une démodulation souple et délivre des valeurs souples LRV au décodeur à entrées souples 9. Ainsi, si on utilise une modulation MAQ-16 sur quatre bits, la démodulation I/Q souple (« soft demapping » en anglais) consiste à calculer quatre valeurs souples correspondant aux quatre bits de la modulation MAQ-16.

Le Logarithme de Rapport de Vraisemblance associé au bit bI,q s'écrit :

$$LRV(bI,q) = \ln \frac{\sum\limits_{\lambda \in S_{I,q}^{(1)}} Pr\big[a(k) = \lambda | y(k)\big]}{\sum\limits_{\lambda \in S_{I,q}^{(0)}} Pr\big[a(k) = \lambda | y(k)\big]} \qquad (4)$$

où Pr[a(k) = λ / y(k)] est la probabilité pour que le symbole émis a(k) ait la valeur λ lorsqu'un symbole reçu est y(k), λ étant un symbole complexe de référence de constellation MAQ associé au symbole complexe émis a(k). A titre d'exemple non limitatif, les symboles complexes de référence λ de la constellation MAQ-4 sont :

$\lambda_1 = (1 + i)$,
$\lambda_2 = (1 - i)$,
$\lambda_3 = (-1 + i)$,
$\lambda_4 = (-1 - i)$.

De façon générale, pour un bit bI,q, une constellation MAQ est partagée en deux blocs complémentaires de symboles complexes de référence λ, le bloc $S_{I,q}^{(0)}$ contenant les symboles λ ayant un '0' à la position (I,q) et le bloc $S_{I,q}^{(1)}$ contenant les symboles λ ayant un '1' à la position (I,q). Une même partition existe pour un bit bQ,p.

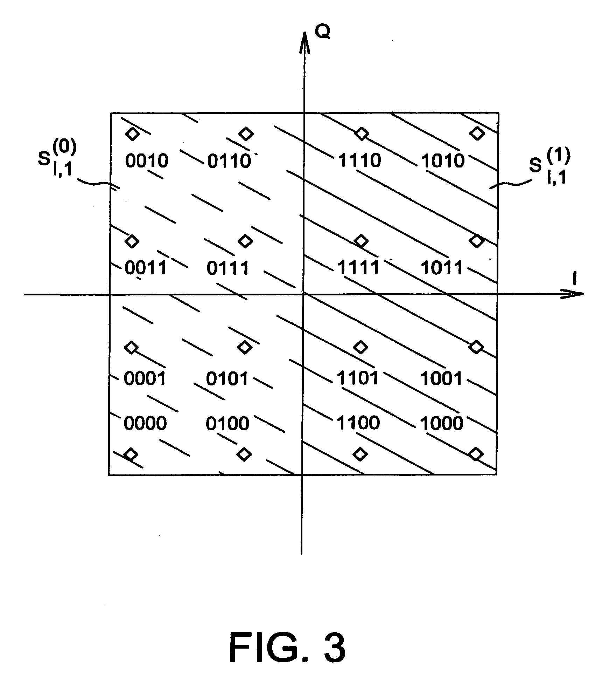

La figure 3 représente, à titre d'exemple, les partitions en blocs complémentaires du plan complexe (I, Q) relatives au bit bI,1, dans le cas d'une constellation MAQ-16. Pour une constellation MAQ-16, un symbole complexe est constitué de quatre bits bI,1, bI,2, bQ,1, bQ,2. Par définition, les bits bI,1, bI,2, bQ,1, bQ,2 ont les positions respectives (I,1), (I,2), (Q,1), (Q,2).

Les deux partitions complémentaires pour les bits bI,1, bI,2, bQ,1, bQ,2 sont alors respectivement :

- $S_{I,1}^{(0)}$ et $S_{I,1}^{(1)}$,

- $S_{I,2}^{(0)}$ et $S_{I,2}^{(1)}$,

- $S_{Q,1}^{(0)}$ et $S_{Q,1}^{(1)}$,

- $S_{Q,2}^{(0)}$ et $S_{I,2}^{(1)}$.

Sur la figure 3, la partition $S_{I,1}^{(0)}$ est représentée par la zone en traits discontinus et la partition $S_{I,1}^{(1)}$ représentée par la zone en traits continus.

En appliquant le théorème de Bayes et en faisant l'hypothèse que les symboles émis sont distribués de manière équiprobable, le LRV associé au bit bI,q peut alors s'exprimer selon l'équation suivante :

$$LRV(bI,q) = \ln \frac{\sum\limits_{\lambda \in S_{I,q}^{(1)}} Pr\big[y(k) | a(k) = \lambda\big]}{\sum\limits_{\lambda \in S_{I,q}^{(0)}} Pr\big[y(k) | a(k) = \lambda\big]} \qquad (5)$$

où $Pr[y(k)|a(k) = \lambda]$ est la probabilité d'avoir reçu le symbole $y(k)$ sachant que le symbole émis $a(k)$ est égal à $\lambda$.

Le numérateur du logarithme dans l'équation (5) ci-dessus somme les probabilités pour tous les symboles ayant un '1' pour le bit à la position (I,q) et le dénominateur somme les probabilités pour tous les symboles ayant un '0' à la position (I,q). Ces probabilités sont des fonctions en exponentielle décroissante de la distance euclidienne entre les symboles reçus et les symboles de référence $\lambda$. Le résultat est une valeur souple indiquant le degré de confiance pour le bit $b_{I,q}$, où une valeur positive indique un '1' alors qu'une valeur négative indique un '0'.

Après l'opération de démodulation souple en quadrature est effectué le décodage qui réalise les opérations duales effectuées par le codeur à l'émission. Sont alors réalisées les opérations de désentrelacement de bit, de dépoinçonnage et de décodage de Viterbi afin de retrouver les données binaires émises $d(k)$.

Ci-dessous est présenté le calcul du LRV communément utilisé dans un système MC-CDMA de l'art connu.

Le $i^{ème}$ symbole de données complexes reçu pour l'utilisateur $k$ après une détection mono-utilisateur s'exprime sous la forme suivante, si l'on considère que la donnée a été transmise et étalée sur N sous porteuses (cf. référence bibliographique [1]) :

$$y(k) = a(k)\sqrt{p_k} \sum_{l=0}^{N-1} |c_{k,l}|^2 H_l g_{k,l} + \sum_{\substack{i=0 \\ i \neq k}}^{K-1} \sqrt{p_i} \sum_{l=0}^{N-1} H_l g_{k,l} a_i c^*_{k,l} c_{i,l} + \sum_{l=0}^{N-1} g_{k,l} c^*_{k,l} n_l \quad (6)$$

Si l'on considère des codes d'étalement de Walsh Hadamard (codes orthogonaux réels prenant les valeurs $C_{k,l} = \pm 1$), nous obtenons alors :

$$y(k) = a(k)\sqrt{p_k} \sum_{l=0}^{N-1} H_l g_{k,l} + \sum_{\substack{i=0 \\ i \neq k}}^{K-1} \sqrt{p_i} \sum_{l=0}^{N-1} H_l g_{k,l} a_i c_{i,l} c_{k,l} + \sum_{l=0}^{N-1} g_{k,l} c_{k,l} n_l \quad (7)$$

Lorsqu'un entrelaceur fréquentiel est appliqué, les coefficients complexes $H_l$ du canal affectant les symboles $a(k)$ peuvent être considérés comme étant indépendants. Ainsi, pour des codes d'étalement suffisamment longs (N $\geq$ 8), les termes d'interférences d'accès multiple complexe (termes IAM) et de bruit peuvent être approximés comme des bruits additifs gaussiens complexes (selon le théorème central limite) de moyenne nulle et de variances respectives :

$$\sigma^2_{IAM} \approx 2(K - 1)\left(E\left[|g_{k,l}H_l|^2\right] - \left|E[H_l g_{k,l}]\right|^2\right)$$

$$(8)$$

$$\sigma^2_{BRUIT} \approx N\sigma^2 E\left[|g_{k,l}|^2\right]$$

Soit :

$$\sigma^2_{IAM} \approx 2\left(\sum_{\substack{i=0 \\ i \neq k}}^{K-1} p_i\right)\left(E\left[|g_{k,l}H_l|^2\right] - \left|E[H_l g_{k,l}]\right|^2\right)$$

$$(9)$$

$$\sigma^2_{BRUIT} \approx N\sigma^2 E\left[|g_{k,l}|^2\right]$$

Les équations (8) correspondent au cas où tous les utilisateurs ont une puissance identique et les équations (9) correspondent au cas où la puissance des utilisateurs est différente d'un utilisateur à l'autre.

La loi des grands nombres permet d'évaluer les espérances mathématiques en remplaçant les espérances par la moyenne empirique des termes considérés. Par conséquent, si N$\geq$8, les variances pour les termes de bruit et d'IAM peuvent se formuler de la façon suivante, d'une part pour des puissances identiques :

$$\sigma_{IAM}^2 \approx 2(K-1)\left(\frac{1}{N}\sum_{l=0}^{N-1}\left|g_{k,l}H_l\right|^2 - \frac{1}{N^2}\left|\sum_{l=0}^{N-1}H_l g_{k,l}\right|^2\right)$$ (10)

$$\sigma_{BRUIT}^2 \approx \sigma^2 \sum_{l=0}^{N-1}\left|g_{k,l}\right|^2$$

et, d'autre part, pour des puissances différentes :

$$\sigma_{IAM}^2 \approx 2\left(\sum_{\substack{i=0\\i\neq k}}^{K-1}Pi\right)\left(\frac{1}{N}\sum_{l=0}^{N-1}\left|g_{k,l}H_l\right|^2 - \frac{1}{N^2}\left|\sum_{l=0}^{N-1}H_l g_{k,l}\right|^2\right)$$ (11)

$$\sigma_{BRUIT}^2 \approx \sigma^2 \sum_{L=0}^{N-1}\left|g_{k,l}\right|^2$$

Le LRV à utiliser pour le bit bI,q à l'entrée du décodeur afin d'obtenir un décodage de Viterbi dans le cas d'une modulation MAQ-M s'écrit alors :

$$LRV(bI,q) = \ln \frac{\displaystyle\sum_{\lambda\in S_{I,q}^{(1)}}\exp\left(-\frac{1}{2}\frac{\left|y(k)-\lambda\sqrt{P_k}\sum_{l=0}^{N-1}g_{k,l}H_l\right|^2}{\sigma_{BRUIT}^2+\sigma_{IAM}^2}\right)}{\displaystyle\sum_{\lambda\in S_{I,q}^{(0)}}\exp\left(-\frac{1}{2}\frac{\left|y(k)-\lambda\sqrt{P_k}\sum_{l=0}^{N-1}g_{k,l}H_l\right|^2}{\sigma_{BRUIT}^2+\sigma_{IAM}^2}\right)}$$ (12)

La même relation s'applique pour les bits de la voie en quadrature Q.
A partir de l'équation (12), on peut obtenir, par exemple, la formule exacte pour une modulation MAQ-4 généralisée au cas des puissances différentes :

$$LRV(bI,q) = \frac{4\sqrt{P_k}\left|\sum_{l=0}^{N-1}g_{k,l}H_l\right|}{\sigma_{IAM}^2+\sigma_{BRUIT}^2}y_I(k)$$ (13)

où $y_I(k)$ correspond à la partie réelle du symbole complexe reçu $y(k)$ après égalisation. Une relation identique s'applique pour la partie imaginaire selon l'axe Q.
Pour des facteurs d'étalement grands, le calcul effectué dans l'équation (13) peut se simplifier comme suit :

$$LRV(bI, q) \approx 4 \frac{\sqrt{P_k}}{\sigma^2} y_I(k) \qquad (14)$$

En effet pour des facteurs d'étalement grands, le terme qui pondère $y_I(k)$ devient quasiment constant et n'a donc pas d'effet sur le processus de décodage à entrées souples.

Pour les facteurs d'étalement courts, l'expression simplifiée (14) donne de nettement moins bons résultats que l'expression (13) parce que le théorème central limite n'est plus vérifié. Une approche donnant des performances similaires à celle utilisant l'expression (13), même en utilisant une égalisation mono-utilisateur MMSE (MMSE pour « Minimum Mean Square Error »), consiste à pondérer le symbole reçu de la façon suivante :

$$LRV(bI, q) \approx \frac{4\sqrt{P_k}}{\sigma^2} \frac{1}{N} \left( \sum_{l=0}^{N-1} |H_l| \right) y_I(k) \qquad (15)$$

Dans la pratique, l'équation (15) est préférable à l'équation (13) lorsqu'on utilise un égaliseur MMSE mono-utilisateur, puisque la complexité de calcul est réduite sans perte significative de performance. Cependant, il doit être noté que l'équation (15) donne de nettement moins bons résultats que l'équation (13) pour les égaliseurs MRC (MRC pour « Maximum Ratio Combining ») et ZF (ZF pour « Zero Forcing »).

Les méthodes de calcul du LRV de l'art antérieur décrites ci-dessus reposent sur l'hypothèse selon laquelle les sous-porteuses sont indépendantes. Or, si l'entrelacement fréquentiel n'est pas mis en oeuvre à l'émission ou si, bien que mis en oeuvre, l'entrelacement fréquentiel ne décorrèle pas suffisamment les sous-porteuses, l'hypothèse d'indépendance des sous-porteuses n'est plus valide et les formules de LRV données ci-dessus ne sont alors plus optimales. Le décodeur de Viterbi corrige alors moins d'erreurs, ce qui représente un inconvénient.

Les méthodes de décodage de l'art antérieur nécessitent par ailleurs la connaissance de la valeur des codes d'étalement. Ceci représente un autre inconvénient.

L'invention ne présente pas les inconvénients mentionnés ci-dessus.

## EXPOSE DE L'INVENTION

En effet l'invention concerne un procédé de démodulation souple, par calcul d'un Logarithme de Rapport de Vraisemblance (LRV), de symboles complexes estimés (y(1), y(2), ..., y(k), ..., y(K)) correspondant à des symboles complexes émis (a(1), a(2), ..., a(k), ..., a(K)) contenus dans un signal émis par un émetteur multiporteuses à accès multiples par répartition de codes et constitués de données binaires codées par codage convolutif et modulées en quadrature selon une modulation MAQ-M, M étant un nombre entier égal à $2^m$ et m étant un nombre entier supérieur ou égal 1, un symbole complexe émis a (k) de rang k (k=1, 2, ..., K) étant étalé par un code d'étalement associé à un utilisateur de rang k, les données binaires codées par codage convolutif constituant, pour l'utilisateur de rang k, une séquence de bits {bI,1 ; bI,2 ; ..., bI,q ; ..., bI,r; bQ,1 ; bQ,2 ; ..., bQ,p ; ..., bQ,s}, dans laquelle le bit bI,q est le $q^{ième}$ bit codé d'une partie en phase du signal émis et le bit bQ,p est le $p^{ième}$ bit codé d'une partie en quadrature du signal émis.

Le Logarithme de Rapport de Vraisemblance (LRV) du bit bI,q et le Logarithme de Rapport de Vraisemblance (LRV) du bit bQ,p s'écrivent, respectivement :

$$LRV(bI, q) = \ln \frac{\displaystyle\sum_{\lambda \in S_{I,q}^{(1)}} \exp\left(-\frac{1}{2}\beta|\tilde{y}(k) - \lambda|^2\right)}{\displaystyle\sum_{\lambda \in S_{I,q}^{(0)}} \exp\left(-\frac{1}{2}\beta|\tilde{y}(k) - \lambda|^2\right)}$$

et

$$LRV(bQ, p) = \ln \frac{\sum_{\lambda \in S_{Q,p}^{(1)}} \exp\left(-\frac{1}{2}\beta|\tilde{y}(k) - \lambda|^2\right)}{\sum_{\lambda \in S_{Q,p}^{(0)}} \exp\left(-\frac{1}{2}\beta|\tilde{y}(k) - \lambda|^2\right)}$$

avec :

- $\beta = \eta^2/V$, où
  $\eta$ est une limite finie, lorsque le nombre total K de codes d'étalement et la longueur N des codes d'étalement tendent vers l'infini et que la quantité $\alpha$ ($\alpha=K/N$) est inférieure ou égale à 1, d'une variable aléatoire $\eta_k$ qui pondère le symbole complexe émis a(k) de sorte que :

$$y(k) = \eta_k\, a(k) + \tau_k,$$

où y(k) est le symbole complexe estimé de rang k qui correspond au symbole complexe émis a(k) et $\tau_k$ est une variable aléatoire représentant une valeur de bruit issu d'un filtrage de bruit d'accès multiples et de bruit thermique,
- V est une limite finie de la variance de la variable aléatoire $\tau_k$,
- $\tilde{y}(k)$ est un symbole complexe estimé normalisé tel que $\tilde{y}(k) = y(k)/\eta$.
- $\lambda$ est un symbole complexe de référence de constellation MAQ associée à la modulation MAQ-M,
- $S^{(1)}I,q$ est une partition du plan complexe qui regroupe l'ensemble des symboles complexes de référence ayant un « 1 » à la position (I, q),
- $S^{(0)}I,q$ est une partition du plan complexe qui regroupe l'ensemble des symboles complexes de référence ayant un « 0 » à la position (I, q),
- $S^{(1)}Q,p$ est une partition du plan complexe qui regroupe l'ensemble des symboles complexes de référence ayant un « 1 » à la position (Q, p),
- $S^{(0)}Q,p$ est une partition du plan complexe qui regroupe l'ensemble des symboles complexes de référence ayant un « 0 » à la position (Q, p).

Selon une caractéristique supplémentaire de l'invention, dans le cas d'une modulation MAQ-M carrée pour laquelle $M=2^{2a}$, a étant un nombre entier supérieur ou égal à 1, le Logarithme de Rapport de Vraisemblance (LRV) du bit bI,q et le Logarithme de Rapport de Vraisemblance (LRV) du bit bQ,p s'écrivent (pour a=1) ou s'approximant (pour a>1) selon les formules respectives :

$$LRV\ (bI,q) = \beta \times M_{I,q}\ ,$$

avec

$M_{I,q} = \tilde{y}_1(k)$ pour q = 1, et
$M_{I,q} = -|M_{I,q-1}| + m_{I,q}$ pour q > 1,

$\tilde{y}_I(k)$ étant la composante en phase du symbole complexe estimé normalisé $\tilde{y}(k)$ et $m_{I,q}$ étant la moitié de la distance entre les partitions du plan complexe $S^{(0)}I,q$ et $S^{(1)}I,q$
et

$$LRV\ (bQ,\ p) = \beta \times M_{Q,\ p},$$

avec

$M_{Q,p} = \tilde{y}_Q(k)$ pour p = 1, et
$M_{Q,p} = -|M_{Q,p-1}| + m_{Q,p}$ pour p > 1,

$\tilde{y}_Q(k)$ étant la composante en quadrature du symbole complexe normalisé $\tilde{y}(k)$ et $m_{Q,p}$ étant la moitié de la distance entre les partitions du plan complexe $S^{(0)}Q,p$ et $S^{(1)}Q,p$.

Selon une autre caractéristique supplémentaire de l'invention, $\beta$ s'écrit :

$$\beta = p_k \frac{\left( \int_0^1 \left| h\left(e^{2i\pi f}\right) \right|^2 df \right)}{\alpha \overline{p} \left[ \frac{\int_0^1 \left| h\left(e^{2i\pi f}\right) \right|^4 df}{\int_0^1 \left| h\left(e^{2i\pi f}\right) \right|^2 df} - \int_0^1 \left| h\left(e^{2i\pi f}\right) \right|^2 df \right] + \sigma^2}$$

où :

- $h(e^{2i\pi f})$ est une réponse fréquentielle de canal
- $\overline{p}$ est une puissance moyenne associée à l'ensemble des K codes d'étalement
- $p_k$ est une puissance associée au code d'étalement de l'utilisateur de rang k
- $\sigma^2$ est une variance de bruit thermique.

Selon encore une autre caractéristique supplémentaire de l'invention, $\beta$ s'écrit :

$$\beta = \frac{p_k}{\sigma^2} \frac{\left( \int_0^1 \frac{\left| h\left(e^{2i\pi f}\right) \right|^2}{\left| h\left(e^{2i\pi f}\right) \right|^2 + \frac{\sigma^2}{\alpha \overline{p}}} df \right)}{\int_0^1 \frac{df}{\left| h\left(e^{j2\pi f}\right) \right|^2 + \frac{\sigma^2}{\alpha \overline{p}}}}$$

où :

- $h(e^{2i\pi f})$ est une réponse fréquentielle de canal,
- $\overline{p}$ est une puissance moyenne associée à l'ensemble des K codes d'étalement utilisés,
- $p_k$ est une puissance associée au code d'étalement de l'utilisateur de rang k
- $\sigma^2$ est une variance de bruit thermique.

Selon encore une autre caractéristique de l'invention, $\beta$ est solution de l'équation ci-dessous :

$$1 = \int_0^1 \frac{1}{\frac{\sigma^2}{\left| h\left(e^{j2\pi f}\right) \right|^2} A(\alpha, p_k, \beta) + \alpha.B(\alpha, p_k, \beta)} df$$

avec: $A(\alpha, p_k, \beta) = (1 - \alpha) \frac{\beta}{p_k} + \alpha.\beta.m(p_k, \beta)$ $\quad B(\alpha, p_k, \beta) = 1 - p_k.m(p_k, \beta)$

$$m(p_k, \beta) = \int_{-\infty}^{+\infty} \frac{\mu_{power}(u)}{p_k + \beta.u}\, du$$

où :

- $\mu_{power}(p)$ est une distribution limite de puissance relative aux différentes puissances associées aux différents codes d'étalement, lorsque N et K tendent vers l'infini, $\alpha = K/N$ restant constant,
- $h(e^{2i\pi f})$ est une réponse fréquentielle du canal, et
- $p_k$ est une puissance associée au code d'étalement de l'utilisateur de rang k.

Selon encore une autre caractéristique de l'invention, le Logarithme de Rapport de Vraisemblance approximé du bit bI,q et le Logarithme de Rapport de Vraisemblance approximé du bit bQ,p s'écrivent, respectivement :

$$\text{LRV}(bI,q) = (\eta/V)\, Z_{I,q},$$

avec

$Z_{I,q} = y_I$ pour q = 1, et
$Z_{I,q} = -|Z_{I,q-1}| + \eta x m_{I,q}$ pour q > 1,

$y_I$ étant la composante en phase du symbole complexe estimé y(k) et $m_{I,q}$ étant la moitié de la distance entre les partitions du plan complexe $S^{(0)}I,q$ et $S^{(1)}I,q$, et

$$\text{LRV}(bQ, p) = (\eta/V)\, Z_{Q,p},$$

avec

$Z_{Q,p} = y_Q$ pour p = 1, et
$Z_{Q,p} = -|Z_{Q,p-1}| + \eta x m_{Q,p}$ pour p > 1,

$y_Q$ étant la composante en quadrature du symbole complexe estimé y(k) et $m_{Q,p}$ étant la moitié de la distance entre les partitions du plan complexe $S^{(0)}Q,p$ et $S^{(1)}Q,p$.

L'invention concerne également un procédé de décodage de symboles complexes estimés (y(1), y(2), ..., y(k), ..., y(K)) comprenant une étape de démodulation souple par calcul d'un Logarithme de Rapport de Vraisemblance (LRV) et une étape de décodage par un algorithme de décodage à entrées souples pour calculer, à partir du Logarithme de Rapport de Vraisemblance (LRV), une séquence de bits correspondant, bit à bit, à une séquence de bits codés par codage convolutif, caractérisé en ce que l'étape de démodulation souple est mise en oeuvre par un procédé selon l'invention.

Selon une caractéristique supplémentaire du procédé de décodage de l'invention, l'algorithme de décodage à entrées souples est l'algorithme de Viterbi à entrées souples.

Selon encore une caractéristique supplémentaire du procédé de décodage de l'invention, le codage convolutif est un turbo-codage convolutif et l'algorithme de décodage à entrées souples est l'algorithme de Viterbi à entrées et sorties souples qui utilise un critère de maximum de vraisemblance ou l'algorithme de maximisation de probabilité a posteriori qui utilise un critère de maximum a posteriori.

Le procédé de démodulation souple selon l'invention calcule les décisions souples optimales à fournir en entrée d'un décodeur à entrées souples dans le cas où les sous-porteuses sont corrélées et pour des codes d'étalement orthogonaux dont il n'est pas nécessaire de connaître la valeur. Le procédé s'applique avantageusement à n'importe quel type de modulation MAQ-M

<u>BREVE DESCRIPTION DES FIGURES</u>

D'autres caractéristiques et avantages de l'invention apparaîtront à la lecture d'un mode de réalisation préférentiel fait en référence aux figures jointes parmi lesquelles :

- la figure 1 représente un émetteur MC-CDMA à codage convolutif selon l'art antérieur ;

- la figure 2 représente un récepteur MC-CDMA avec égalisation et décodage convolutif selon l'art connu ;
- La figure 3 représente, à titre d'exemple, les partitions complémentaires du plan complexe (I, Q) pour le bit bI, 1 dans le cas d'une constellation MAQ-16 ;
- la figure 4 représente un récepteur à décodage convolutif selon l'invention.

DESCRIPTION DETAILLEE DE MODES DE REALISATION DE L'INVENTION

Les figures 1 à 3 ont été décrites précédemment. Il est donc inutile d'y revenir.

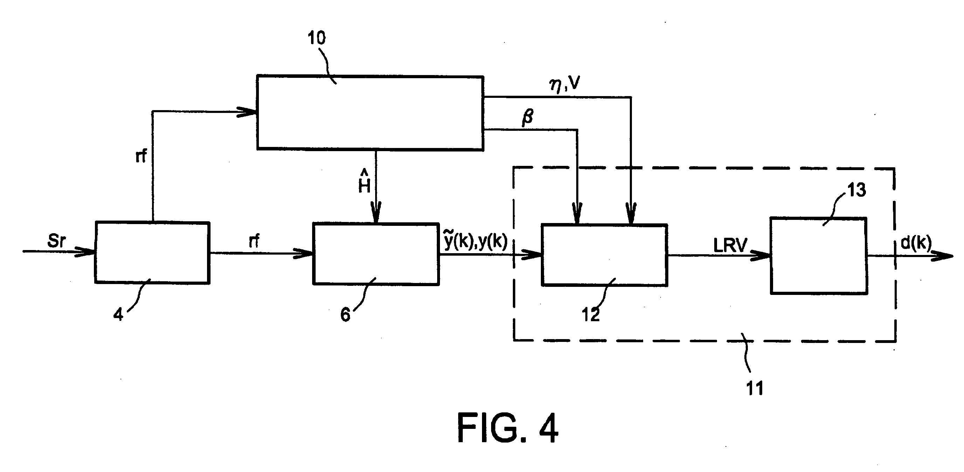

Le récepteur à décodage convolutif selon l'invention représenté en figure 4 comprend un circuit de traitement 4, un égaliseur 6, un estimateur 10 et une unité de décodage 11. L'unité de décodage 11 comprend un circuit de démodulation souple 12 et un décodeur à entrées souples 13.

Selon l'invention le circuit de démodulation souple 12 calcule le LRV pour le bit bI,q selon la formule ci-dessous :

$$LRV(bI,q) = \ln \frac{\sum_{\lambda \in s_{I,q}^{(1)}} \exp\left(-\frac{1}{2}\beta|\widetilde{y} - \lambda|^2\right)}{\sum_{\lambda \in s_{I,q}^{(0)}} \exp\left(-\frac{1}{2}\beta|\widetilde{y} - \lambda|^2\right)} \qquad (16)$$

où le coefficient $\beta$ est un Rapport Signal à Interférences plus Bruit asymptotique qui est explicité en détail dans la suite de la description. Le LRV pour le bit bQ,p est donné par une formule similaire. Le coefficient $\beta$ est délivré par l'estimateur 10.

A la sortie d'un récepteur linéaire mono ou multi-utilisateur(s) pour un système MC-CDMA et DS-CDMA, il est connu que le symbole complexe estimé y(k) relatif à l'utilisateur de rang k peut s'écrire de la façon suivante :

$$y(k) = \eta_k \, a(k) + \tau_k \qquad (17)$$

où $\eta_k$ et $\tau_k$ sont des variables aléatoires qui dépendent d'une façon complexe des matrices du canal, des codes d'étalement et des puissances des codes. La grandeur $\tau_k$ est le résultat du filtrage des bruits d'accès multiples et du bruit thermique. Les variables $\eta_k$ et $\tau_k$ vont maintenant être explicitées ci-dessous.

La théorie des matrices aléatoires s'applique à des systèmes contenant des variables aléatoires tels que les codes d'étalement pour les systèmes DS-CDMA (Direct- Sequence Code Division Multiple Access) et MC-CDMA (Multi-Carrier Code Division Multiple Access). Lorsque les dimensions du système deviennent grandes (nombre de codes, taille des codes), la théorie des matrices aléatoires offre des outils d'analyse très puissants. Les principaux résultats de l'analyse asymptotique sont les suivants (cf. références bibliographiques [2] et [3]) :

Lorsque N et K $\to \infty$ et $\alpha \leq 1$ ($\alpha$=K/N) est fixe, $\eta_k$ converge vers une limite finie et déterministe $\eta$,
Lorsque N et K $\to \infty$ et $\alpha$ est fixe, $\tau_k$ devient gaussien et sa variance converge vers une limite finie et déterministe V.

Etant donné que $\eta_k$ converge et que $\tau_k$ a un comportement gaussien, l'équation (17) s'écrit alors :

$$y(k) = \eta \, a(k) + \tau_k \qquad (18)$$

Ce qui représente une transmission à travers un canal à bruit blanc additif gaussien ou canal BBAG (BBAG pour « Bruit Blanc Additif Gaussien »).

Pour obtenir ces résultats, la matrice des codes est supposée avoir une distribution de Haar (cf. référence bibliographique [3]). Ceci permet d'appliquer des résultats puissants de la théorie des probabilités libres. De plus la borne asymptotique est atteinte pour des valeurs pratiques du facteur d'étalement (N $\geq$ 16).

Lorsque l'on considère des constellations d'ordre m strictement supérieur à 2 (M=$2^m$, avec m>2) les décisions ne se font plus uniquement sur le signe des parties réelles et imaginaires du symbole issu de l'égaliseur. Il faut alors normaliser les symboles issus de l'égaliseur avant d'effectuer l'opération de « soft demapping ». Dans le cas contraire, l'opération de comparaison avec les symboles de référence est erronée.

Dans la suite de la description, on notera $\tilde{y}(k)$ le symbole obtenu après normalisation en sortie de l'égaliseur 6. Il vient :

$$\tilde{y}(k) = a(k) + \frac{\tau_k}{\eta} \,,$$

ou encore

$$\tilde{y}(k) = y(k) / \eta$$

L'équation (12) de l'art antérieur fait apparaître l'estimation de la variance du bruit d'accès multiple $\sigma^2_{IAM}$. Ce terme est difficile à calculer dans le cas général puisqu'il dépend des codes d'étalement utilisés, de la matrice du canal et des puissances des codes. La solution connue proposée dans la littérature consiste à supposer les sous-porteuses indépendantes et à utiliser des codes d'étalement orthogonaux réels possédant autant de -1 que de +1. Le calcul du LRV selon l'art antérieur s'avère donc compliqué puisqu'il dépend des codes d'étalement.

Sur la base de l'équation (16), le procédé de démodulation selon l'invention ne présente pas ces inconvénients. Il est alors possible, par exemple, de donner la formule exacte à utiliser pour une modulation MAQ-4. Si l'on note $y_l(k)$ la partie réelle du symbole reçu après détection linéaire pour l'utilisateur k et $\tilde{y}_l(k)$ la partie réelle du symbole reçu après détection linéaire et normalisation, il vient alors la relation suivante pour le Logarithme du Rapport de Vraisemblance relatif au bit bl,q :

$$LRV(bI,q) = 4 \frac{\eta^2}{V} \tilde{y}_I(k) \qquad (19)$$

où $\dfrac{\eta^2}{V}$ représente le Rapport SINR asymptotique $\beta$ délivré par l'estimateur 10.

Une équation du même type que l'équation mentionnée ci-dessus est bien sûr applicable pour la partie imaginaire du symbole reçu.

Différentes expressions particulières du LRV, déduites de l'équation (19), vont maintenant être calculées pour différents types de récepteurs linéaires 6, dans le cadre, par exemple, d'une modulation MAQ-2 (BPSK) ou MAQ-4 (QPSK).

a) Cas d'un récepteur MRC (MRC pour « Maximum Ratio Combining ») :

Un récepteur MRC maximise le Rapport Signal à Bruit (RSB) en sortie de l'égaliseur dans un contexte mono-utilisateur. Un filtre adapté applique un coefficient sur chaque sous-porteuse afin de maximiser l'énergie reçue avant que l'opération de désétalement ne soit réalisée :

$$g_k = H \ c_k \ ,$$

avec $y(k) = g_k^H r f$

Ce récepteur est optimal dans un contexte mono-utilisateur mais offre de mauvaises performances dans un contexte multi-utilisateurs (et donc multi-codes), car il est très sensible au bruit d'accès multiple.

Il a été démontré (cf. référence bibliographique [4]) que pour un récepteur MRC les valeurs de $\eta$ et de V dans le cas d'un canal non ergodique sont les suivantes :

$$\eta = \sqrt{p_k} \int_0^1 \left| h\left(e^{2i\pi f}\right) \right|^2 df \qquad (20)$$

$$V = \alpha\overline{p}\left(\int_0^1 \left|h\left(e^{2i\pi f}\right)\right|^4 df - \left(\int_0^1 \left|h\left(e^{2i\pi f}\right)\right|^2 df\right)^2\right) + \sigma^2 \int_0^1 \left|h\left(e^{2i\pi f}\right)\right|^2 df \qquad (21)$$

En conséquence la formule du LRV de l'équation (19) devient:

$$LRV(bI,q) = 4p_k \frac{\left(\int_0^1 \left|h\left(e^{2i\pi f}\right)\right|^2 df\right)\tilde{y}_I}{\alpha\overline{p}\left(\dfrac{\int_0^1 \left|h\left(e^{2i\pi f}\right)\right|^4 df}{\int_0^1 \left|h\left(e^{2i\pi f}\right)\right|^2 df} - \int_0^1 \left|h\left(e^{2i\pi f}\right)\right|^2 df\right) + \sigma^2} \qquad (22)$$

Cette équation peut également s'écrire :

$$LRV(bI,q) = 4p_k \frac{\tilde{y}_I}{\alpha\overline{p}\left(\dfrac{\int_0^1 \left|h\left(e^{2i\pi f}\right)\right|^4 df}{\left(\int_0^1 \left|h\left(e^{2i\pi f}\right)\right|^2 df\right)^2} - 1\right) + \dfrac{\sigma^2}{\left(\int_0^1 \left|h\left(e^{2i\pi f}\right)\right|^2 df\right)}} \qquad (23)$$

En outre, si l'on considère que la réponse fréquentielle du canal est plate sur chaque sous porteuse, on obtient alors :

$$LRV(bI,q) = 4p_k \frac{\tilde{y}_I}{\alpha\overline{p}\left(\dfrac{N\sum_{l=1}^N |H_l|^4}{\left(\sum_{l-1}^N |H_l|^2\right)^2} - 1\right) + \sigma^2 \dfrac{N}{\sum_{l-1}^N |H_l|^2}} \qquad (24)$$

b) Récepteur à minimisation de l'erreur quadratique moyenne sous optimal ou récepteur MMSE sous optimal (MMSE pour « Minimum Mean Square Error » :

Ce récepteur minimise l'erreur quadratique moyenne entre le signal transmis et le signal reçu pour chaque sous-porteuse puis désétale le signal résultant pour estimer chaque symbole:

$$g_k = \left(HH^H + \frac{\sigma^2}{\alpha\overline{p}}\right)^{-1} Hc_k \qquad (25)$$

Cette technique d'égalisation MMSE par sous porteuse n'est pas optimale puisqu'elle égalise simplement le canal de transmission sans prendre en compte le processus de désétalement dans le calcul de l'égaliseur. Néanmoins elle a l'avantage de réaliser un compromis entre la réduction de l'interférence d'accès multiple et le réhaussement du niveau de bruit.

Dans le document cité en référence bibliographique [5], il est montré que pour le récepteur MMSE sous optimal, les termes $\eta$ et V s'écrivent dans le cas d'un canal non ergodique sous la forme suivante :

$$\eta = \int_0^1 \frac{\left|h\left(e^{2i\pi f}\right)\right|^2}{\left|h\left(e^{2i\pi f}\right)\right|^2 + \frac{\sigma^2}{\alpha\overline{p}}} df$$

$$V = \alpha\overline{p}\eta(1 - \eta) \tag{26}$$

Par conséquent le LRV donné à l'équation (16) devient :

$$LRV(bI, q) = 4\frac{p_k}{\sigma^2} \frac{\left(\int_0^1 \frac{\left|h\left(e^{2i\pi f}\right)\right|^2}{\left|h\left(e^{2i\pi f}\right)\right|^2 + \frac{\sigma^2}{\alpha\overline{p}}} df\right)\tilde{y}_I}{\int_0^1 \frac{df}{\left|h\left(e^{j2\pi f}\right)\right|^2 + \frac{\sigma^2}{\alpha\overline{p}}}} \tag{27}$$

En outre, si l'on considère que la réponse fréquentielle du canal est plate sur chaque sous porteuse, on obtient:

$$LRV(bI, q) = 4\frac{p_k}{\sigma^2} \frac{\left(\sum_{k=0}^{N-1} \frac{\left|H_k\right|^2}{\left|H_k\right|^2 + \frac{\sigma^2}{\alpha\overline{p}}}\right)\tilde{y}_I}{\sum_{k=0}^{N-1} \frac{1}{\left|H_k\right|^2 + \frac{\sigma^2}{\alpha\overline{p}}}} \tag{28}$$

Avantageusement, on constate que la formulation du LRV dans le cas du récepteur MMSE mono-utilisateur est plus simple à implémenter que celle de l'art antérieur.

c) Récepteur MMSE optimal

Le coefficient g(k) de l'égaliseur s'écrit ici :

$$g(k) = \sqrt{p_k}\left(H.CPC^H H^H + \sigma^2 I\right)^{-1} hC_k \tag{29}$$

Ce type de récepteur inverse le canal au niveau symbole en prenant en compte les codes d'étalement et le canal de propagation. Cette technique s'appuie sur la connaissance a priori des séquences d'étalement et sur la puissance de chacun des utilisateurs actifs.

Le SINR instantané pour l'utilisateur k en sortie du récepteur MMSE optimal s'écrit alors (cf. [6]) :

$$\mathrm{SINR}_k = P_k c_k^H H^H \left( H.U_k Q_k U_k^H H^H + \sigma^2 I \right)^{-1} H c_k \tag{30}$$

où :

- $U_k$ correspond à la matrice C des codes d'étalement, de laquelle est extrait le vecteur colonne $C_k$ correspondant au code de l'utilisateur de rang k,
- $Q_k$ correspond à la matrice P des puissances, de laquelle est extraite la puissance $P_k$ de l'utilisateur de rang k.

Dans le cas d'un canal non ergodique, il est montré dans [6] que le SINR converge vers sa valeur asymptotique $\beta$ solution de l'équation implicite suivante :

$$1 = \int_0^1 \frac{1}{\dfrac{\sigma^2}{\left| h\left(e^{j2\pi f}\right) \right|^2} A(\alpha, p_k, \beta) + \alpha.B(\alpha, p_k, \beta)} df \tag{31}$$

avec :

$$A(\alpha, p_k, \beta) = (1 - \alpha)\frac{\beta}{p_k} + \alpha\beta m(p_k, \beta)$$

$$B(\alpha, p_k, \beta) = 1 - p_k.m(p_k, \beta)$$

$$m(p_k, \beta) = \int_{-\infty}^{+\infty} \frac{\mu_{power}(u)}{p_k + \beta.u} du$$

et où $\mu_{power}(p)$ est la distribution limite de la puissance lorsque N et K tendent vers l'infini et $\alpha$ ($\alpha$=K/N) reste constant. Par exemple, si le système comporte $K_c$ classes de puissance $p_1 ..., p_{Kc}$, alors :

$$\mu_{power}(u) = \sum_{i=0}^{K_c-1} \gamma_i \delta(p - p_i) \tag{32}$$

où $\gamma_i$ est le ratio de codes appartenant à la classe i de puissance $p_i$ et $\delta(p-p_i)$ est la distribution de Dirac relative à la variable p.

L'équation (31) montre que l'on peut calculer uniquement la valeur de $\beta$, la valeur de $\sigma^2_{IAM}$ restant inaccessible.

On en déduit alors la formule exacte du Logarithme de Rapport de Vraisemblance à savoir :

$$\mathrm{LRV}(bI, q) = 4p_k\beta\tilde{y}_I \tag{33}$$

Où $\beta$ est donné à partir de l'équation (31).

Les formules données dans les cas a), b) et c) ci-dessus s'appuient sur l'équation (19) qui correspond à une modulation QPSK.

Pour les modulations MAQ-M carrées d'ordre strictement supérieur ou égal à 4 (M = $2^{2a}$, avec a > 1), le procédé de l'invention propose une approche simplifiée.

Dans le document cité en référence bibliographique [7], une simplification pour le calcul du LRV est décrite pour les constellations MAQ-M carrées d'ordre supérieur ou égal à 4 des systèmes OFDM codés (systèmes COFDM). Cette simplification conduit à écrire le Logarithme du Rapport de Vraisemblance pour le bit bI,q sous la forme :

$$LRV(bI,q) = |H|^2 M_{I,q}$$

avec

H la réponse fréquentielle du canal,

$M_{I,q} = \tilde{y}_I(k)$ pour q = 1, et

$M_{I,q} = -|M_{I,q}|+m_{I,q}$ pour q > 1,

$\tilde{y}_I(k)$ étant la composante en phase du symbole complexe estimé normalisé et $m_{I,q}$ étant la moitié de la distance entre les partitions du plan complexe $S^{(0)}I,q$ et $S^{(1)}I,q$.

De façon surprenante, dans le cadre de l'invention, il a été constaté que les formules des Logarithmes de Rapport de Vraisemblance pour la démodulation des symboles complexes estimés correspondant aux symboles complexes émis modulés en quadrature selon une modulation MAQ-M carrée d'ordre supérieur ou égal à 4, pouvaient être approximées suit :

$$LRV(bI,q) = \beta \times M_{I,q},$$

avec

$M_{I,q} = \tilde{y}_I(k)$ pour q = 1, et

$M_{I},q = -|M_{I,q-1}| + m_{I,q}$ pour q > 1,

$\tilde{y}_I(k)$ étant la composante en phase du symbole complexe estimé normalisé $\tilde{y}(k)$ et $m_{I,q}$ étant la moitié de la distance entre les partitions du plan complexe $S^{(0)}I,q$ et $S^{(1)}I,q$

et

$$LRV(bQ, p) = \beta \times M_{Q, p},$$

avec

$M_{Q,p} = \tilde{y}_Q(k)$ pour p = 1, et

$M_{Q,p} = -|M_{Q,p-1}| + m_{Q,p}$ pour p > 1,

$\tilde{y}_Q(k)$ étant la composante en quadrature du symbole complexe normalisé $\tilde{y}(k)$ et $m_{Q,p}$ étant la moitié de la distance entre les partitions du plan complexe $S^{(0)}Q,p$ et $S^{(1)}Q,p$, le coefficient $\beta$ étant donné, selon les cas, par l'une quelconque des formules mentionnées ci-dessus.

Cette approximation dans les formules des LRV constitue une simplification dans la mise en oeuvre de l'invention. Avantageusement, cette simplification autorise l'utilisation, en sortie de l'égaliseur, de la variable non normalisée y ($y=\eta\tilde{y}$) et non pas de la variable normalisée $\tilde{y}$. Avantageusement, il n'est alors pas nécessaire de diviser par $\eta$ le signal délivré par l'égaliseur, ce qui réalise une simplification matérielle, une division étant toujours plus coûteuse à mettre en oeuvre qu'une multiplication.

Il vient alors :

$$LRV(bI,q) = (\eta/V) Z_{I,q},$$

avec

$Z_{I,q} = y_I$ pour q = 1, et

$Z_{I,q} = -|Z_{I,q-1}| + \eta \times m_{I,q}$ pour q > 1,

$y_I$ étant la composante en phase du symbole complexe estimé y(k) et $m_{I,q}$ étant la moitié de la distance entre les partitions du plan complexe $S^{(0)}I,q$ et $S^{(1)}I,q$, et

$$\text{LRV} \ (bQ, \ p) \ = \ (\eta/V) \, Z_{Q,p},$$

avec

$Z_{Q,p} = y_Q$ pour p = 1, et
$Z_Q,p = - |Z_{Q,p-1}| + \eta x m_{Q,p}$ pour p > 1,

$y_Q$ étant la composante en quadrature du symbole complexe estimé y(k) et $m_{Q,p}$ étant la moitié de la distance entre les partitions du plan complexe $S^{(0)}Q,p$ et $S^{(1)}Q,p$. Les grandeurs $\eta$ et V sont délivrées par l'estimateur 10.

**REFERENCES BIBLIOGRAPHIQUES**

[1] « OFDM Code Division Multiplexing in Fading Channels » (Stefan Kaiser), IEEE Transactions On Communication, vol.50, n°8, Août 2002.

[2] "Asymptotic distribution of large random matrices and performance of large CDMA systems" (P. Loubaton), Proceedings, Seventh ISSPA Conf., Volume 2, 1-4 Juillet 2003, pages 205-214.

[3] "Linear Precoders for OFDM Wireless Communications" (M. Debbah), PhD Thesis, Université de Marne la Vallée, Octobre 2002.

[4] "Simple polynomial MMSE Receivers for CDMA Transmission on frequency Selective Channels" (W. Hachem), soumis à la conférence IEEE Transactions on Information Theory, Juillet 2002, publié sur le site internet d'adresse "http://www.supelec.fr/ecole/radio/hachem.html".

[5] "Asymptotic Analysis of Optimum and SubOptimum CDMA Downlink MMSE Receivers" (J.M. Chaufray, W. Hachem, and Ph. Loubaton) soumis à la conférence ISIT' 2002 à Lausanne, publié sur le site internet d'adresse http://syscom.univ-mlv.fr/loubaton/index.html.

[6] "Asymptotical Analysis of the Multiuser MMSE Receiver for the downlink of a MC-CDMA system" (P. Jallon, M. des Noés, D. Kténas and J.M Brossier), VTC Spring 2003, Jeju, Korea.

[7] "Simplified Soft-Output Demapper for Binary Interleaved COFDM with Application to HIPERLAN/2" (F. Tosato, P. Bisaglia), IEEE International Conference on Communications 1CC 2002, pp.664-668, vol.2.

**Revendications**

1. Procédé de démodulation souple, par calcul de Logarithme de Rapport de Vraisemblance, de symboles complexes estimés (y(1), y(2), ..., y(k), ..., y(K)) correspondant à des symboles complexes émis (a(1), a(2), ..., a(k), ..., a(K)) contenus dans un signal émis par un émetteur multiporteuses à accès multiples par répartition de codes et constitués de données binaires codées par codage convolutif et modulées en quadrature selon une modulation MAQ-M, M étant un nombre entier égal à $2^m$ et m étant un nombre entier supérieur ou égal à 1, un symbole complexe émis a(k) de rang k, k=1, 2, ..., K, étant étalé par un code d'étalement associé à un utilisateur de rang k, les données binaires codées par codage convolutif constituant, pour l'utilisateur de rang k, une séquence de bits {bI, 1; bI,2 ; ..., bI,q ; ..., bI, r ; bQ, 1 ; bQ, 2 ; ..., bQ,p ; ..., bQ, s} , dans laquelle le bit bI,q est le $q^{ième}$ bit utilisé pour moduler une partie en phase du signal émis et le bit bQ,p est le $p^{ième}$ bit utilisé pour moduler une partie en quadrature du signal émis, **caractérisé en ce qu'**il comprend un calcul de Logarithme de Rapport de Vraisemblance LRV(bI,q) du bit bI,q et un calcul de Logarithme de Rapport de Vraisemblance LRV(bQ,p) du bit bQ,p qui utilisent les formules respectives suivante :

$$LRV(bI, q) = \ln \frac{\sum_{\lambda \in S_{I,q}^{(1)}} \exp\left(-\frac{1}{2}\beta|\tilde{y}(k) - \lambda|^2\right)}{\sum_{\lambda \in S_{I,q}^{(0)}} \exp\left(-\frac{1}{2}\beta|\tilde{y}(k) - \lambda|^2\right)}$$

et

$$LRV(bQ, p) = \ln \frac{\sum_{\lambda \in S_{Q,p}^{(1)}} \exp\left(-\frac{1}{2}\beta|\tilde{y}(k) - \lambda|^2\right)}{\sum_{\lambda \in S_{Q,p}^{(0)}} \exp\left(-\frac{1}{2}\beta|\tilde{y}(k) - \lambda|^2\right)}$$

avec :

- $\beta = \eta^2/V$, où

- $\eta$ est la limite finie, lorsque le nombre total K de codes d'étalement et la longueur N des codes d'étalement tendent vers l'infini et que la quantité $\alpha$=K/N est inférieure ou égale à 1, d'une variable aléatoire $\eta_k$ telle que :

$$y(k) = \eta_k\, a(k) + \tau_k,$$

où y(k) est le symbole complexe estimé de rang k qui correspond au symbole complexe émis a(k) et $\tau_k$ est une variable aléatoire représentant une valeur de bruit issu d'un filtrage de bruit d'accès multiples et de bruit thermique, et
- V est la limite finie de la variance de la variable aléatoire $\tau_k$, $\beta$ satisfaisant à la formule suivante :

$$\beta = p_k \frac{\left(\int_0^1 |h(e^{2i\pi f})|^2\, df\right)}{\alpha\overline{p}\left[\dfrac{\int_0^1 |h(e^{2i\pi f})|^4\, df}{\int_0^1 |h(e^{2i\pi f})|^2\, df} - \int_0^1 |h(e^{2i\pi f})|^2\, df\right] + \sigma^2}$$

où :

- $h(e^{2i\pi f})$ est la réponse fréquentielle de canal,
- $\overline{p}$ est la puissance moyenne associée à l'ensemble des K codes d'étalement,
- $p_k$ est la puissance associée au code d'étalement de l'utilisateur de rang k,
- $\sigma^2$ est la variance de bruit thermique,

- $\tilde{y}(k)$ est un symbole complexe estimé normalisé tel que $\tilde{y}(k) = y(k)/n$,
- $\lambda$ est un symbole complexe de référence de constellation MAQ associée à la modulation MAQ-M,
- $S^{(1)}I,q$ est une partition du plan complexe qui regroupe l'ensemble des symboles complexes de référence ayant un « 1 » à la position (I, q),
- $S^{(0)}I,q$ est une partition du plan complexe qui regroupe l'ensemble des symboles complexes de référence ayant un « 0 » à la position (I, q),
- $S^{(1)}Q,p$ est une partition du plan complexe qui regroupe l'ensemble des symboles complexes de référence ayant un « 1 » à la position (Q, p),
- $S^{(0)}Q,p$ est une partition du plan complexe qui regroupe l'ensemble des symboles complexes de référence ayant un « 0 » à la position (Q, p).

2. Procédé de démodulation souple, par calcul de Logarithme de Rapport de Vraisemblance, de symboles complexes estimés (y(1), y(2), ..., y(k), ..., y(K)) correspondant à des symboles complexes émis (a(1), a(2), ..., a(k), ..., a(K)) contenus dans un signal émis par un émetteur multiporteuses à accès multiples par répartition de codes et constitués de données binaires codées par codage convolutif et modulées en quadrature selon une modulation MAQ-M, M étant un nombre entier égal à $2^m$ et m étant un nombre entier supérieur ou égal à 1, un symbole complexe émis a(k) de rang k, k=1, 2, ..., K, étant étalé par un code d'étalement associé à un utilisateur de rang k, les données binaires codées par codage convolutif constituant, pour l'utilisateur de rang k, une séquence de bits {bI,1 ; bI,2 ; ..., bI,q ; ..., bI,r ; bQ,1 ; bQ, 2 ; ..., bQ,p ; ..., bQ,s}, dans laquelle le bit bI,q est le $q^{\text{ième}}$ bit utilisé pour moduler une partie en phase du signal émis et le bit bQ,p est le $p^{\text{iéme}}$ bit utilisé pour moduler une partie en quadrature du signal émis, **caractérisé en ce qu'**il comprend un calcul de Logarithme de Rapport de Vraisemblance LRV(bI,q) du bit bI,q et un calcul de Logarithme de Rapport de Vraisemblance LRV(bQ,p) du bit bQ,p qui utilisent les formules respectives suivantes :

$$LRV(bI, q) = \ln \frac{\displaystyle\sum_{\lambda \in S^{(1)}_{I,q}} \exp\left(-\frac{1}{2}\beta|\tilde{y}(k) - \lambda|^2\right)}{\displaystyle\sum_{\lambda \in S^{(0)}_{I,q}} \exp\left(-\frac{1}{2}\beta|\tilde{y}(k) - \lambda|^2\right)}$$

et

$$LRV(bQ, p) = \ln \frac{\displaystyle\sum_{\lambda \in S^{(1)}_{Q,p}} \exp\left(-\frac{1}{2}\beta|\tilde{y}(k) - \lambda|^2\right)}{\displaystyle\sum_{\lambda \in S^{(0)}_{Q,p}} \exp\left(-\frac{1}{2}\beta|\tilde{y}(k) - \lambda|^2\right)}$$

avec :

- $\beta = \eta^2/V$, où

- $\eta$ est la limite finie, lorsque le nombre total K de codes d'étalement et la longueur N des codes d'étalement tendent vers l'infini et que la quantité $\alpha$=K/N est inférieure ou égale à 1, d'une variable aléatoire $\eta_k$ telle que :

$$y(k) = \eta_k\, a(k) + \tau_k,$$

où y(k) est le symbole complexe estimé de rang k qui correspond au symbole complexe émis a(k) et $\tau_k$ est

une variable aléatoire représentant une valeur de bruit issu d'un filtrage de bruit d'accès multiples et de bruit thermique, et

- V est la limite finie de la variance de la variable aléatoire $\tau_k$, $\beta$ satisfaisant à la formule suivante :

$$\beta = \frac{p_k}{\sigma^2} \frac{\left( \int_0^1 \frac{\left|h\left(e^{2i\pi f}\right)\right|^2}{\left|h\left(e^{2i\pi f}\right)\right|^2 + \frac{\sigma^2}{\alpha \overline{p}}} df \right)}{\int_0^1 \frac{df}{\left|h\left(e^{j2\pi f}\right)\right|^2 + \frac{\sigma^2}{\alpha \overline{p}}}}$$

où :

- $h(e^{2i\pi f})$ est la réponse fréquentielle de canal,
- $\overline{p}$ est la puissance moyenne associée à l'ensemble des K codes d'étalement utilisés,
- $p_k$ est la puissance associée au code d'étalement de l'utilisateur de rang k
- $\sigma^2$ est la variance de bruit thermique,
- $\tilde{y}(k)$ est un symbole complexe estimé normalisé tel que $\tilde{y}(k) = y(k)/n$,
- $\lambda$ est un symbole complexe de référence de constellation MAQ associée à la modulation MAQ-M,
- $S^{(1)}I,q$ est une partition du plan complexe qui regroupe l'ensemble des symboles complexes de référence ayant un « 1 » à la position (I, q),
- $S^{(0)}I,q$ est une partition du plan complexe qui regroupe l'ensemble des symboles complexes de référence ayant un « 0 » à la position (I, q),
- $S^{(1)}Q,p$ est une partition du plan complexe qui regroupe l'ensemble des symboles complexes de référence ayant un « 1 » à la position (Q, p),
- $S^{(0)}Q,p$ est une partition du plan complexe qui regroupe l'ensemble des symboles complexes de référence ayant un « 0 » à la position (Q, p).

3. Procédé de démodulation souple, par calcul de Logarithme de Rapport de Vraisemblance, de symboles complexes estimés (y(1), y(2), ..., y(k), ..., y(K)) correspondant à des symboles complexes émis (a(1), a(2), ..., a(k), ..., a(K)) contenus dans un signal émis par un émetteur multiporteuses à accès multiples par répartition de codes et constitués de données binaires codées par codage convolutif et modulées en quadrature selon une modulation MAQ-M, M étant un nombre entier égal à $2^m$ et m étant un nombre entier supérieur ou égal à 1, un symbole complexe émis a(k) de rang k, k=1, 2, ..., K, étant étalé par un code d'étalement associé à un utilisateur de rang k, les données binaires codées par codage convolutif constituant, pour l'utilisateur de rang k, une séquence de bits {bI,1 ; bI,2 ; ..., bI,q ; ..., bI,r ; bQ,1 ; bQ,2 ; ..., bQ,p ; ..., bQ,s}, dans laquelle le bit bI,q est le q[ième] bit utilisé pour moduler une partie en phase du signal émis et le bit bQ,p est le p[ième] bit utilisé pour moduler une partie en quadrature du signal émis, **caractérisé en ce qu'**il comprend un calcul de Logarithme de Rapport de Vraisemblance LRV(bI,q) du bit bI,q et un calcul de Logarithme de Rapport de Vraisemblance LRV(bQ,p) du bit bQ,p qui utilisent les formules respectives suivantes :

$$LRV(bI, q) = \ln \frac{\sum_{\lambda \in S_{I,q}^{(1)}} \exp\left(-\frac{1}{2} \beta \left|\tilde{y}(k) - \lambda\right|^2\right)}{\sum_{\lambda \in S_{I,q}^{(0)}} \exp\left(-\frac{1}{2} \beta \left|\tilde{y}(k) - \lambda\right|^2\right)}$$

et

$$LRV(bQ, p) = \ln \frac{\sum_{\lambda \in S^{(1)}_{Q,p}} \exp\left(-\frac{1}{2}\beta|\tilde{y}(k) - \lambda|^2\right)}{\sum_{\lambda \in S^{(0)}_{Q,p}} \exp\left(-\frac{1}{2}\beta|\tilde{y}(k) - \lambda|^2\right)}$$

avec :

- $\beta = \eta^2/V$, où

    - $\eta$ est la limite finie, lorsque le nombre total K de codes d'étalement et la longueur N des codes d'étalement tendent vers l'infini et que la quantité $\alpha=K/N$ est inférieure ou égale à 1, d'une variable aléatoire $\eta_k$ telle que :

$$y(k) = \eta_k\, a(k) + \tau_k,$$

où y(k) est le symbole complexe estimé de rang k qui correspond au symbole complexe émis a(k) et $\tau_k$ est une variable aléatoire représentant une valeur de bruit issu d'un filtrage de bruit d'accès multiples et de bruit thermique, et
- V est la limite finie de la variance de la variable aléatoire $\tau_k$, $\beta$ satisfaisant à la formule suivante :

$$1 = \int_0^1 \frac{1}{\dfrac{\sigma^2}{\left|h\left(e^{j2\pi f}\right)\right|^2} A(\alpha, p_k, \beta) + \alpha.B(\alpha, p_k, \beta)}\, df$$

avec: $A(\alpha, p_k, \beta) = (1 - \alpha)\dfrac{\beta}{p_k} + \alpha.\beta.m(p_k, \beta)$

$B(\alpha, p_k, \beta) = 1 - p_k.m(p_k, \beta)$

$$m(p_k, \beta) = \int_{-\infty}^{+\infty} \frac{\mu_{power}(u)}{p_k + \beta.u}\, du$$

où :

    - $\mu_{power}(p)$ est la distribution limite de puissance relative aux différentes puissances associées aux différents codes d'étalement, lorsque N et K tendent vers l'infini $\alpha=K/N$ restant constant,
    - $h(e^{2i\pi f})$ est la réponse fréquentielle du canal, et
    - $p_k$ est la puissance associée au code d'étalement de l'utilisateur de rang k,
    - $\tilde{y}(k)$ est un symbole complexe estimé normalisé tel que $\tilde{y}(k) = y(k)/\eta$,
    - $\lambda$ est un symbole complexe de référence de constellation MAQ associée à la modulation MAQ-M,
    - $S^{(1)}I,q$ est une partition du plan complexe qui regroupe l'ensemble des symboles complexes de référence ayant un « 1 » à la position (I, q),
    - $S^{(0)}I,q$ est une partition du plan complexe qui regroupe l'ensemble des symboles complexes de référence ayant un « 0 » à la position (I, q),
    - $S^{(1)}Q,p$ est une partition du plan complexe qui regroupe l'ensemble des symboles complexes de référence ayant un « 1 » à la position (Q, p),
    - $S^{(0)}Q,p$ est une partition du plan complexe qui regroupe l'ensemble des symboles complexes de référence ayant un « 0 » à la position (Q, p).

4. Procédé de démodulation souple, par calcul de Logarithme de Rapport de Vraisemblance, de symboles complexes estimés (y(1), y(2), ..., y(k), ..., y(K)) correspondant à des symboles complexes émis (a(1), a (2), ..., a(k), ..., a(K)) contenus dans un signal émis par un émetteur multiporteuses à accès multiples par répartition de codes et constitués de données binaires codées par codage convolutif et modulées en quadrature selon une modulation MAQ-M, M étant un nombre entier égal à $2^{2a}$ et a étant un nombre entier supérieur ou égal à 2, un symbole complexe émis a(k) de rang k, k=1, 2, ..., K, étant étalé par un code d'étalement associé à un utilisateur de rang k, les données binaires codées par codage convolutif constituant, pour l'utilisateur de rang k, une séquence de bits {bI,1 ; bI,2 ; ..., bI,q ; ..., bI,r ; bQ,1 ; bQ,2 ; ..., bQ,p ; ..., bQ,s}, dans laquelle le bit bI,q est le q$^{ième}$ bit utilisé pour moduler une partie en phase du signal émis et le bit bQ,p est le p$^{ième}$ bit utilisé pour moduler une partie en quadrature du signal émis, **caractérisé en ce qu'**il comprend un calcul de Logarithme de Rapport de Vraisemblance LRV(bI,q) du bit bI,q et un calcul de Logarithme de Rapport de Vraisemblance LRV(bQ,p) du bit b,p qui utilisent les formules respectives suivantes :

$$\text{LRV (bI,q)} = \beta \times M_{I,q} \; ,$$

avec

$M_{I,q} = \tilde{y}_I(k)$ pour q = 1, et
$M_{I,q} = -|M_{I,q-1}| + m_{I,q}$ pour q > 1,

$\tilde{y}_I(k)$ étant la composante en phase du symbole complexe estimé normalisé $\tilde{y}(k)$ et $m_{I,q}$ étant la moitié de la distance entre les partitions du plan complexe $S^{(0)}I,q$ et $S^{(1)}I,q$
et

$$\text{LRV (bQ, p)} = \beta \times M_{Q, p},$$

avec

$M_{Q,p} = \tilde{y}_Q(k)$ pour p = 1, et
$M_{Q,p} = -|M_{Q,p-1}| + m_{Q,p}$ pour p > 1,

$\tilde{y}_Q(k)$ étant la composante en quadrature du symbole complexe normalisé $\tilde{y}(k)$ et $m_{Q,p}$ étant la moitié de la distance entre les partitions du plan complexe $S^{(0)}Q,p$ et $S^{(1)}Q,p$,
et
avec :

- $\beta = \eta^2/V$, où

    - $\eta$ est la limite finie, lorsque le nombre total K de codes d'étalement et la longueur N des codes d'étalement tendent vers l'infini et que la quantité $\alpha$=K/N est inférieure ou égale à 1, d'une variable aléatoire $\eta_k$ telle que :

$$y(k) = \eta_k \, a(k) + \tau_k,$$

    où y(k) est le symbole complexe estimé de rang k qui correspond au symbole complexe émis a(k) et $\tau_k$ est une variable aléatoire représentant une valeur de bruit issu d'un filtrage de bruit d'accès multiples et de bruit thermique, et
    - V est la limite finie de la variance de la variable aléatoire $\tau_k$, $\beta$ satisfaisant à la formule suivante :

$$\beta = p_k \cfrac{\left(\displaystyle\int_0^1 \left|h\!\left(e^{2i\pi f}\right)\right|^2 df\right)}{\alpha\overline{p}\left(\cfrac{\displaystyle\int_0^1 \left|h\!\left(e^{2i\pi f}\right)\right|^4 df}{\displaystyle\int_0^1 \left|h\!\left(e^{2i\pi f}\right)\right|^2 df} - \displaystyle\int_0^1 \left|h\!\left(e^{2i\pi f}\right)\right|^2 df\right) + \sigma^2}$$

où:

- $h(e^{2i\pi f})$ est la réponse fréquentielle de canal,
- $\overline{p}$ est la puissance moyenne associée à l'ensemble des K codes d'étalement,
- $p_k$ est la puissance associée au code d'étalement de l'utilisateur de rang k,
- $\sigma^2$ est la variance de bruit thermique,
- $\tilde{y}(k)$ est un symbole complexe estimé normalisé tel que $\tilde{y}(k) = y(k)/\eta$,
- $\lambda$ est un symbole complexe de référence de constellation MAQ associée à la modulation MAQ-M,
- $S^{(1)}I,q$ est une partition du plan complexe qui regroupe l'ensemble des symboles complexes de référence ayant un « 1 » à la position (I, q),
- $S^{(0)}I,q$ est une partition du plan complexe qui regroupe l'ensemble des symboles complexes de référence ayant un « 0 » à la position (I, q),
- $S^{(1)}Q,p$ est une partition du plan complexe qui regroupe l'ensemble des symboles complexes de référence ayant un « 1 » à la position (Q, p),
- $S^{(0)}Q,p$ est une partition du plan complexe qui regroupe l'ensemble des symboles complexes de référence ayant un « 0 » à la position (Q, p).

5. Procédé de démodulation souple, par calcul de Logarithme de Rapport de Vraisemblance, de symboles complexes estimés (y(1), y(2), ..., y(k), ..., y(K)) correspondant à des symboles complexes émis (a(1), a(2), ..., a(k), ..., a(K)) contenus dans un signal émis par un émetteur multiporteuses à accès multiples par répartition de codes et constitués de données binaires codées par codage convolutif et modulées en quadrature selon une modulation MAQ-M, M étant un nombre entier égal à $2^{2a}$ et a étant un nombre entier supérieur ou égal à 2, un symbole complexe émis a(k) de rang k, k=1, 2, ..., K, étant étalé par un code d'étalement associé à un utilisateur de rang k, les données binaires codées par codage convolutif constituant, pour l'utilisateur de rang k, une séquence de bits {bI,1 ; bI,2 ; ..., bI, q ; ..., bI,r ; bQ,1 ; bQ,2 ; ..., bQ,p ; ..., bQ,s}, dans laquelle le bit bI,q est le q$^{ième}$ bit utilisé pour moduler une partie en phase du signal émis et le bit bQ,p est le p$^{ième}$ bit utilisé pour moduler une partie en quadrature du signal émis, **caractérisé en ce qu'**il comprend un calcul de Logarithme de Rapport de Vraisemblance LRV(bI,q) du bit bI,q et un calcul de Logarithme de Rapport de Vraisemblance LRV(bQ,p) du bit bQ,p qui utilisent les formules respectives suivantes :

$$LRV(bI,q) = \beta \times M_{I,q},$$

avec

$M_{I,q} = \tilde{y}_I(k)$ pour q = 1, et
$M_{I,q} = -|M_{I,q-1}| + m_{I,q}$ pour q > 1,

$\tilde{y}_I(k)$ étant la composante en phase du symbole complexe estimé normalisé $\tilde{y}(k)$ et $m_{I,q}$ étant la moitié de la distance entre les partitions du plan complexe $S^{(0)}I,q$ et $S^{(1)}I,q$
et

$$\mathrm{LRV}\ (b_Q,\ p)\ =\ \beta\ \times\ M_{Q,\ p},$$

avec

$M_{Q,p} = \tilde{y}_Q(k)$ pour p = 1, et
$M_{Q,p} = - |M_{Q,p-1}| + m_{Q,p}$ pour p > 1,

$\tilde{y}_Q(k)$ étant la composante en quadrature du symbole complexe normalisé $\tilde{y}(k)$ et $m_{Q,p}$ étant la moitié de la distance entre les partitions du plan complexe $S^{(0)}Q,p$ et $S^{(1)}Q,p$,
avec :

- $\beta = \eta^2/V$, où

- $\eta$ est la limite finie, lorsque le nombre total K de codes d'étalement et la longueur N des codes d'étalement tendent vers l'infini et que la quantité $\alpha=K/N$ est inférieure ou égale à 1, d'une variable aléatoire $\eta_k$ telle que :

$$y(k)\ =\ \eta_k\ a(k)\ +\ \tau_k,$$

où y(k) est le symbole complexe estimé de rang k qui correspond au symbole complexe émis a(k) et $\tau_k$ est une variable aléatoire représentant une valeur de bruit issu d'un filtrage de bruit d'accès multiples et de bruit thermique, et
- V est la limite finie de la variance de la variable aléatoire $\tau_k$, $\beta$ satisfaisant à la formule suivante :

$$\beta\ =\ \frac{p_k}{\sigma^2}\ \frac{\left(\displaystyle\int_0^1 \frac{\left|h\!\left(e^{2i\pi f}\right)\right|^2}{\left|h\!\left(e^{2i\pi f}\right)\right|^2 + \dfrac{\sigma^2}{\alpha\overline{p}}}\,df\right)}{\displaystyle\int_0^1 \frac{df}{\left|h\!\left(e^{j2\pi f}\right)\right|^2 + \dfrac{\sigma^2}{\alpha\overline{p}}}}$$

où :

- $h(e^{2i\pi f})$ est la réponse fréquentielle de canal,
- $\overline{p}$ est la puissance moyenne associée à l'ensemble des K codes d'étalement utilisés,
- $p_k$ est la puissance associée au code d'étalement de l'utilisateur de rang k
- $\sigma^2$ est la variance de bruit thermique,
- $\tilde{y}(k)$ est un symbole complexe estimé normalisé tel que $\tilde{y}(k) = y(k)/\eta$,
- $\lambda$ est un symbole complexe de référence de constellation MAQ associée à la modulation MAQ-M,
- $S^{(1)}I,q$ est une partition du plan complexe qui regroupe l'ensemble des symboles complexes de référence ayant un « 1 » à la position (I, q),
- $S^{(0)}I,q$ est une partition du plan complexe qui regroupe l'ensemble des symboles complexes de référence ayant un « 0 » à la position (I, q),
- $S^{(1)}Q,p$ est une partition du plan complexe qui regroupe l'ensemble des symboles complexes de référence ayant un « 1 » à la position (Q, p),
- $S^{(0)}Q,p$ est une partition du plan complexe qui regroupe l'ensemble des symboles complexes de référence ayant un « 0 » à la position (Q, p).

6. Procédé de démodulation souple, par calcul de Logarithme de Rapport de Vraisemblance, de symboles complexes estimés (y(1), y(2), ..., y(k), ..., y(K)) correspondant à des symboles complexes émis (a(1), a(2), ..., a(k), ..., a(K)) contenus dans un signal émis par un émetteur multiporteuses à accès multiples par répartition de codes et constitués de données binaires codées par codage convolutif et modulées en quadrature selon une modulation MAQ-M, M étant un nombre entier égal à $2^{2a}$ et a étant un nombre entier supérieur ou égal à 2, un symbole complexe émis a(k) de rang k, k=1, 2, ..., K, étant étalé par un code d'étalement associé à un utilisateur de rang k, les données binaires codées par codage convolutif constituant, pour l'utilisateur de rang k, une séquence de bits {bI,1 ; bI,2; ..., bI,q; ..., bI,r; bQ,1 ; bQ, 2 ; ..., bQ,p ; ..., bQ,s}, dans laquelle le bit bI,q est le $q^{ième}$ bit utilisé pour moduler une partie en phase du signal émis et le bit bQ,p est le $p^{ième}$ bit utilisé pour moduler une partie en quadrature du signal émis, **caractérisé en ce qu'**il comprend un calcul de Logarithme de Rapport de Vraisemblance LRV(bI,q) du bit bI,q et un calcul de Logarithme de Rapport de Vraisemblance LRV(bQ,p) du bit bQ,p qui utilisent les formules respectives suivantes :

$$\mathrm{LRV}\ (b_{I,q})\ =\ \beta\ \times\ M_{I,q}\ ,$$

avec

$M_{I,q} = \tilde{y}_I(k)$ pour q = 1, et
$M_{I,q} = - |M_{I,q-1}| + m_{I,q}$ pour q > 1,

$\tilde{y}_I(k)$ étant la composante en phase du symbole complexe estimé normalisé $\tilde{y}(k)$ et $m_{I,q}$ étant la moitié de la distance entre les partitions du plan complexe $S^{(0)}I,q$ et $S^{(1)}I,q$
et

$$\mathrm{LRV}\ (b_{Q,\ p})\ =\ \beta\ \times\ M_{Q,\ p},$$

avec

$M_{Q,p} = \tilde{y}_Q(k)$ pour p = 1, et
$M_{Q,p} = - |M_{Q,p-1}| + m_{Q,p}$ pour p > 1,

$\tilde{y}_Q(k)$ étant la composante en quadrature du symbole complexe normalisé $\tilde{y}(k)$ et $m_{Q,p}$ étant la moitié de la distance entre les partitions du plan complexe $S^{(0)}Q,p$ et $S^{(1)}Q,p$,
avec :

- $\beta = \eta^2/V$, où

- $\eta$ est la limite finie, lorsque le nombre total K de codes d'étalement et la longueur N des codes d'étalement tendent vers l'infini et que la quantité $\alpha=K/N$ est inférieure ou égale à 1, d'une variable aléatoire $\eta_k$ telle que :

$$y(k)\ =\ \eta_k\ a(k)\ +\ \tau_k,$$

où y(k) est le symbole complexe estimé de rang k qui correspond au symbole complexe émis a(k) et $\tau_k$ est une variable aléatoire représentant une valeur de bruit issu d'un filtrage de bruit d'accès multiples et de bruit thermique, et
- V est la limite finie de la variance de la variable aléatoire $\tau_k$, $\beta$ satisfaisant à la formule suivante :

$$1 = \int_0^1 \cfrac{1}{\cfrac{\sigma^2}{\left|h\left(e^{j2\pi f}\right)\right|^2} A(\alpha, p_k, \beta) + \alpha.B(\alpha, p_k, \beta)} df$$

avec:

$$A(\alpha, p_k, \beta) = (1 - \alpha)\frac{\beta}{p_k} + \alpha.\beta.m(p_k, \beta)$$

$$B(\alpha, p_k, \beta) = 1 - p_k.m(p_k, \beta)$$

$$m(p_k, \beta) = \int_{-\infty}^{+\infty} \frac{\mu_{power}(u)}{p_k + \beta.u} du$$

où :

- $\mu_{power}(p)$ est la distribution limite de puissance relative aux différentes puissances associées aux différents codes d'étalement, lorsque N et K tendent vers l'infini, $\alpha = K/N$ restant constant,
- $h(e^{2i\pi f})$ est la réponse fréquentielle du canal, et
- $p_k$ est la puissance associée au code d'étalement de l'utilisateur de rang k,
- $\tilde{y}(k)$ est un symbole complexe estimé normalisé tel que $\tilde{y}(k) = y(k)/\eta$,
- $\lambda$ est un symbole complexe de référence de constellation MAQ associée à la modulation MAQ-M,
- $S^{(1)}I,q$ est une partition du plan complexe qui regroupe l'ensemble des symboles complexes de référence ayant un « 1 » à la position (I, q),
- $S^{(0)}I,q$ est une partition du plan complexe qui regroupe l'ensemble des symboles complexes de référence ayant un « 0 » à la position (I, q),
- $S^{(1)}Q,p$ est une partition du plan complexe qui regroupe l'ensemble des symboles complexes de référence ayant un « 1 » à la position (Q, p),
- $S^{(0)}Q,p$ est une partition du plan complexe qui regroupe l'ensemble des symboles complexes de référence ayant un « 0 » à la position (Q, p).

7. Procédé de démodulation souple, par calcul de Logarithme de Rapport de Vraisemblance, de symboles complexes estimés (y(1), y(2), ..., y(k), ..., y(K)) correspondant à des symboles complexes émis (a(1), a(2), ..., a(k), ..., a(K)) contenus dans un signal émis par un émetteur multiporteuses à accès multiples par répartition de codes et constitués de données binaires codées par codage convolutif et modulées en quadrature selon une modulation MAQ-M, M étant un nombre entier égal à $2^{2a}$ et a étant un nombre entier supérieur ou égal à 2, un symbole complexe émis a(k) de rang k, k=1, 2, ..., K, étant étalé par un code d'étalement associé à un utilisateur de rang k, les données binaires codées par codage convolutif constituant, pour l'utilisateur de rang k, une séquence de bits {bI,1 ; bI,2; ..., bI,q; ..., bI,r; bQ,1 ; bQ,2 ; ..., bQ,p ; ..., bQ,s}, dans laquelle le bit bI,q est le $q^{ième}$ bit utilisé pour moduler une partie en phase du signal émis et le bit bQ,p est le $p^{ième}$ bit utilisé pour moduler une partie en quadrature du signal émis, **caractérisé en ce qu'**il comprend un calcul de Logarithme de Rapport de Vraisemblance LRV(bI,q) du bit bI,q et un calcul de Logarithme de Rapport de Vraisemblance LRV(bQ,p) du bit bQ,p qui utilisent les formules respectives suivantes :

$$LRV(bI,q) = (\eta/V) Z_{I,q},$$

et

$$LRV(bQ, p) = (\eta/V) Z_{Q,p},$$

avec

$$\eta \;=\; \sqrt{p_k}\,\int_0^1\left|h\!\left(e^{2i\pi f}\right)\right|^2 df \quad,$$

$\eta$ étant la limite finie, lorsque le nombre total K de codes d'étalement et la longueur N des codes d'étalement tendent vers l'infini et que la quantité $\alpha$=K/N est inférieure ou égale à 1, d'une variable aléatoire $\eta_k$ telle que :

$$y(k) \;=\; \eta_k\, a(k) \;+\; \tau_k,$$

où y(k) est le symbole complexe estimé de rang k qui correspond au symbole complexe émis a(k) et $\tau_k$ est une variable aléatoire représentant une valeur de bruit issu d'un filtrage de bruit d'accès multiples et de bruit thermique, et

$$V \;=\; \alpha\overline{p}\left(\int_0^1\left|h\!\left(e^{2i\pi f}\right)\right|^4 df - \left(\int_0^1\left|h\!\left(e^{2i\pi f}\right)\right|^2 df\right)^2\right) + \sigma^2\int_0^1\left|h\!\left(e^{2i\pi f}\right)\right|^2 df$$

V étant la limite finie de la variance de la variable aléatoire $\tau_k$,
Où :

- $h(e^{2i\pi f})$ est la réponse fréquentielle de canal,
- $p_k$ est la puissance associée au code d'étalement de l'utilisateur de rang k,
- $\overline{p}$ est la puissance moyenne associée à l'ensemble des K codes d'étalement,
- $\sigma^2$ est la variance de bruit thermique,
- $Z_{I,q} = y_I$ pour q = 1, où $y_I$ est la composante en phase du symbole complexe estimé y(k),
- $Z_{I,q} = -|Z_{I,q-1}| + \eta x m_{I,q}$ pour q > 1, où $m_{I,q}$ est la moitié de la distance entre des partitions du plan complexe $S^{(1)}I,q$ et $S^{(0)}I,q$ telles que :

  ▪ $S^{(1)}I,q$ est une partition du plan complexe qui regroupe l'ensemble des symboles complexes de référence ayant un « 1 » à la position (I, q), et
  ▪ $S^{(0)}I,q$ est une partition du plan complexe qui regroupe l'ensemble des symboles complexes de référence ayant un « 0 » à la position (I, q),

- $Z_{Q,p} = y_Q$ pour p = 1, où $y_Q$ est la composante en quadrature du symbole complexe estimé y(k),
- $Z_{Q,p} = -|Z_{Q,p-1}| + \eta x m_{Q,p}$ pour p > 1, où $m_{Q,p}$ est la moitié de la distance entre des partitions du plan complexe $S^{(1)}Q,p$ et $S^{(0)}Q,p$ telles que :

  ▪ $S^{(1)}Q,p$ est une partition du plan complexe qui regroupe l'ensemble des symboles complexes de référence ayant un « 1 » à la position (Q, p), et
  ▪ $S^{(0)}Q,p$ est une partition du plan complexe qui regroupe l'ensemble des symboles complexes de référence ayant un « 0 » à la position (Q, p).

8. Procédé de démodulation souple, par calcul de Logarithme de Rapport de Vraisemblance, de symboles complexes estimés (y(1), y(2), ..., y(k), ..., y(K)) correspondant à des symboles complexes émis (a(1), a (2), ..., a(k), ..., a(K)) contenus dans un signal émis par un émetteur multiporteuses à accès multiples par répartition de codes et constitués de données binaires codées par codage convolutif et modulées en quadrature selon une modulation MAQ-M, M étant un nombre entier égal à $2^{2a}$ et a étant un nombre entier supérieur ou égal à 2, un symbole complexe émis a(k) de rang k, k=1, 2, ..., K, étant étalé par un code d'étalement associé à un utilisateur de rang k, les données binaires codées par codage convolutif constituant, pour l'utilisateur de rang k, une séquence de bits {bI,1 ; bI,2 ; ..., bI,q; ..., bI,r ; bQ,1 ; bQ,2 ; ..., bQ,p ; ..., bQ,s}, dans laquelle le bit bI,q est le $q^{ième}$ bit utilisé pour moduler une partie en phase du signal émis et le bit bQ,p est le $p^{ième}$ bit utilisé pour moduler une partie en quadrature du signal émis, **caractérisé en ce qu'**il comprend un calcul de Logarithme de Rapport de Vraisemblance LRV(bI,q) du bit bI,q et un calcul de Logarithme de Rapport de Vraisemblance LRV(bQ,p) du bit bQ,p qui utilisent les formules respectives

suivantes :

$$LRV\ (bI,q)\ =\ (\eta/V)\,Z_{I,q},$$

et

$$LRV\ (bQ,\ p)\ =\ (\eta/V)\,Z_{Q,p},$$

avec

$$\eta = \int_0^1 \frac{\left|h\!\left(e^{2i\pi f}\right)\right|^2}{\left|h\!\left(e^{2i\pi f}\right)\right|^2 + \dfrac{\sigma^2}{\alpha\overline{p}}}\,df$$

$\eta$ étant la limite finie, lorsque le nombre total K de codes d'étalement et la longueur N des codes d'étalement tendent vers l'infini et que la quantité $\alpha=K/N$ est inférieure ou égale à 1, d'une variable aléatoire $\eta_k$ telle que :

$$y(k)\ =\ \eta_k\ a(k)\ +\ \tau_k,$$

où y(k) est le symbole complexe estimé de rang k qui correspond au symbole complexe émis a(k) et $\tau_k$ est une variable aléatoire représentant une valeur de bruit issu d'un filtrage de bruit d'accès multiples et de bruit thermique, et

$$V\ =\ \alpha\ \overline{p}\ \eta\ (1-\eta),$$

V étant la limite finie de la variance de la variablealéatoire $\tau_k$,
Où :

- $h(e^{2i\pi f})$ est la réponse fréquentielle de canal,
- $\overline{p}$ est la puissance moyenne associée à l'ensemble des K codes d'étalement,
- $\sigma^2$ est la variance de bruit thermique,
- $Z_{I,q} = y_I$ pour q = 1, où $y_I$ est la composante en phase du symbole complexe estimé y(k),
- $Z_{I,q} = - |Z_{I,q-1}| + \eta x m_{I,q}$ pour q > 1, où $m_{I,q}$ est la moitié de la distance entre des partitions du plan complexe $S^{(1)}I,q$ et $S^{(0)}I,q$ telles que :

   - $S^{(1)}I,q$ est une partition du plan complexe qui regroupe l'ensemble des symboles complexes de référence ayant un « 1 » à la position (I, q), et
   - $S^{(0)}I,q$ est une partition du plan complexe qui regroupe l'ensemble des symboles complexes de référence ayant un « 0 » à la position (I, q),

- $Z_{Q,p} = y_Q$ pour p = 1, où $y_Q$ est la composante en quadrature du symbole complexe estimé y(k),
- $Z_{Q,p} = - |Z_{Q,p-1}| + \eta x m_{Q,p}$ pour p > 1, où $m_{Q,p}$ est la moitié de la distance entre des partitions du plan complexe $S^{(1)}Q,p$ et $S^{(0)}Q,p$ telles que :

   - $S^{(1)}Q,p$ est une partition du plan complexe qui regroupe l'ensemble des symboles complexes de référence ayant un « 1 » à la position (Q, p), et
   - $S^{(0)}Q,p$ est une partition du plan complexe qui regroupe l'ensemble des symboles complexes de référence ayant un « 0 » à la position (Q, p).

9. Procédé de décodage de symboles complexes estimés (y(1), y(2), ..., y(k), ..., y(K)) comprenant une étape de démodulation souple par calcul d'un Logarithme de Rapport de Vraisemblance (LRV) et une étape de décodage par un algorithme de décodage à entrées souples pour calculer, à partir du Logarithme de Rapport de Vraisemblance (LRV), une séquence de bits correspondant, bit à bit, à une séquence de bits codés par codage convolutif, **caractérisé en ce que** l'étape de démodulation souple est mise en oeuvre par un procédé selon l'une quelconque des revendications 1 à 8.

10. Procédé de décodage selon la revendication 9, **caractérisé en ce que** l'algorithme de décodage à entrées souples est l'algorithme de Viterbi à entrées souples.

11. Procédé de décodage selon la revendication 10, **caractérisé en ce que** le codage convolutif est un turbo-codage convolutif et **en ce que** l'algorithme de décodage à entrées souples est l'algorithme de Viterbi à entrées et sorties souples qui utilise un critère de maximum de vraisemblance ou l'algorithme de maximisation de probabilité a posteriori qui utilise un critère de maximum a posteriori.

**Patentansprüche**

1. Verfahren zur weichen Demodulation mittels Berechnung des Wahrscheinlichkeitsverhältnislogarithmus von geschätzten komplexen Symbolen (y(1), y(2), ..., y(k), ..., y(K)), die ausgesandten komplexen Symbolen (a(1), a(2), ..., a(k), ..., a(K)) entsprechen, welche in einem Signal enthalten sind, das von einem Multiträgersender mit multiplem Zugriff durch Verteilung von Codes ausgesandt ist und durch binäre Daten gebildet ist, welche durch Faltungscodierung codiert und gemäß einer Modulation MAQ-M quadraturmoduliert sind, wobei M eine ganze Zahl gleich $2^m$ ist, und m eine ganze Zahl größer oder gleich 1 ist, wobei ein ausgesandtes komplexes Symbol a(k) vom Rang k, k = 1, 2, ..., K, gespreizt ist durch einen Spreizungscode, der einem Benutzer vom Rang k zugeordnet ist, wobei die durch Faltungscodierung codierten binären Daten für den Benutzer vom Rang k eine Bitsequenz {bI, 1; bI, 2; ..., bI, q; ...; bI, r; bQ, 1; bQ, 2; ..., bQ, p; ...; bQ, s} bilden, wobei das Bit bI, q das q-te Bit ist, das verwendet wird zum Modulieren eines Teils in Phase des ausgesandten Signals, und das Bit bQ, p das p-te Bit ist, das verwendet wird zum Modulieren eines Teils in Quadratur des ausgesandten Signals, **dadurch gekennzeichnet, dass** es eine Berechnung des Wahrscheinlichkeitsverhältnislogarithmus LRV (bI, q) des Bits bI, q sowie eine Berechnung des Wahrscheinlichkeitsverhältnislogarithmus LRV (bQ, p) des Bits bQ, p umfasst, bei der die jeweiligen folgenden Formeln verwendet werden:

$$LRV(bI, q) = \ln \frac{\sum_{\lambda \in S_{I,q}^{(1)}} \exp\left(-\frac{1}{2}\beta|\tilde{y}(k) - \lambda|^2\right)}{\sum_{\lambda \in S_{I,q}^{(0)}} \exp\left(-\frac{1}{2}\beta|\tilde{y}(k) - \lambda|^2\right)}$$

und

$$LRV(bQ, p) = \ln \frac{\sum_{\lambda \in S_{Q,p}^{(1)}} \exp\left(-\frac{1}{2}\beta|\tilde{y}(k) - \lambda|^2\right)}{\sum_{\lambda \in S_{Q,p}^{(0)}} \exp\left(-\frac{1}{2}\beta|\tilde{y}(k) - \lambda|^2\right)}$$

mit:

- $\beta = \eta^2 / V$, wobei

- $\eta$ der endliche Grenzwert einer Zufallsvariablen $\eta_k$ ist, wenn die Gesamtzahl K von Spreizungscodes und die Länge N der Spreizungscodes gegen Unendlich streben und die Größe $\alpha = K / N$ kleiner oder gleich 1 ist, derart, dass:

$$y(k) = \eta_k\, a(k) + \tau_k$$

wobei $y(k)$ das geschätzte komplexe Symbol vom Rang $k$ ist, das dem ausgesandten komplexen Symbol $a(k)$ entspricht, und $\tau_k$ eine Zufallsvariable ist, die einen Rauschwert darstellt, hervorgegangen aus einer Filterung des Rauschens der multiplen Zugriffe und des thermischen Rauschens, und
- V der endliche Grenzwert der Varianz der Zufallsvariablen $\tau_k$ ist, wobei $\beta$ der nachfolgenden Formel genügt:

$$\beta = p_k \frac{\left(\int_0^1 \left|h\!\left(e^{2i\pi f}\right)\right|^2 df\right)}{\alpha\overline{p}\left[\dfrac{\int_0^1 \left|h\!\left(e^{2i\pi f}\right)\right|^4 df}{\int_0^1 \left|h\!\left(e^{2i\pi f}\right)\right|^2 df} - \int_0^1 \left|h\!\left(e^{2i\pi f}\right)\right|^2 df\right] + \sigma^2}$$

wobei

- $h(e^{2i\pi f})$ die Frequenzantwort des Kanals ist,
- $\overline{p}$ die mittlere Leistung ist, die der Gesamtheit der $K$ Spreizungscodes zugeordnet ist,
- $p_k$ die Leistung ist, die dem Spreizungscode des Benutzers vom Rang k zugeordnet ist,
- $\sigma^2$ die Varianz des thermischen Rauschens ist,
- $\tilde{y}(k)$ ein normiertes geschätztes komplexes Symbol derart ist, dass $\tilde{y}(k) = y(k) / \eta$,
- $\lambda$ ein komplexes Symbol der Referenz der Konstellation MAQ ist, die der Modulation MAQ-M zugeordnet ist,
- $S^{(1)}I, q$ eine Unterteilung der komplexen Ebene ist, die die Gesamtheit der komplexen Referenzsymbole mit einer "1" bei der Position (I, q) eingruppiert,
- $S^{(0)}I, q$ eine Unterteilung der komplexen Ebene ist, die die Gesamtheit der komplexen Referenzsymbole mit einer "0" bei der Position (I, q) eingruppiert,
- $S^{(1)}Q,p$ eine Unterteilung der komplexen Ebene ist, die die Gesamtheit der komplexen Referenzsymbole mit einer "1" bei der Position (Q, p) eingruppiert,
- $S^{(0)}Q,p$ eine Unterteilung der komplexen Ebene ist, die die Gesamtheit der komplexen Referenzsymbole mit einer "0" bei der Position (Q, p) eingruppiert.

2. Verfahren zur weichen Demodulation mittels Berechnung des Wahrscheinlichkeitsverhältnislogarithmus von geschätzten komplexen Symbolen (y(1), y(2), ..., y(k), ..., y(K)), die ausgesandten komplexen Symbole (a(1), a(2), ..., a(k), ..., a(K)) entsprechen, welche in einem Signal enthalten sind, das von einem Multiträgersender mit multiplem Zugriff durch Verteilung von Codes ausgesandt ist und durch binäre Daten gebildet ist, welche durch Faltungscodierung codiert und gemäß einer Modulation MAQ-M quadraturmoduliert sind, wobei M eine ganze Zahl gleich $2^m$ ist, und m eine ganze Zahl größer oder gleich 1 ist, wobei ein ausgesandtes komplexes Symbol a(k) vom Rang k, k = 1, 2, ..., K, gespreizt ist durch einen Spreizungscode, der einem Benutzer vom Rang k zugeordnet ist, wobei die durch Faltungscodierung codierten binären Daten für den Benutzer vom Rang keine Bitsequenz {bI, 1; bI, 2; ...; bI, q; ...; bI, r; bQ, 1; bQ, 2; ...; bQ, p; ...; bQ, s} bilden, wobei das Bit bI, q das q-te Bit ist, das verwendet wird zum Modulieren eines Teils in Phase des ausgesandten Signals, und das Bit bQ, p das p-te Bit ist, das verwendet wird zum Modulieren eines Teils in Quadratur des ausgesandten Signals, **dadurch gekennzeichnet, dass** es eine Berechnung des Wahrscheinlichkeitsverhältnislogarithmus LRV (bI, q) des Bits bI, q sowie eine Berechnung des Wahrscheinlichkeitsverhältnislogarithmus LRV (bQ, p) des Bits bQ, p umfasst, bei der die jeweiligen folgenden Formeln verwendet werden:

$$LRV(bI, q) = \ln \frac{\displaystyle\sum_{\lambda \in S_{I,q}^{(1)}} \exp\left(-\frac{1}{2}\beta|\tilde{y}(k) - \lambda|^2\right)}{\displaystyle\sum_{\lambda \in S_{I,q}^{(0)}} \exp\left(-\frac{1}{2}\beta|\tilde{y}(k) - \lambda|^2\right)}$$

und

$$LRV(bQ, p) = \ln \frac{\displaystyle\sum_{\lambda \in S_{Q,p}^{(1)}} \exp\left(-\frac{1}{2}\beta|\tilde{y}(k) - \lambda|^2\right)}{\displaystyle\sum_{\lambda \in S_{Q,p}^{(0)}} \exp\left(-\frac{1}{2}\beta|\tilde{y}(k) - \lambda|^2\right)}$$

mit:

- $\beta = \eta^2 / V$, wobei

- $\eta$ der endliche Grenzwert einer Zufallsvariablen $\eta_k$ ist, wenn die Gesamtzahl K von Spreizungscodes und die Länge N der Spreizungscodes gegen Unendlich streben und die Größe $\alpha = K / N$ kleiner oder gleich 1 ist, derart, dass:

$$y(k) = \eta_k\, a(k) + \tau_k$$

wobei $y(k)$ das geschätzte komplexe Symbol vom Rang $k$ ist, das dem ausgesandten komplexen Symbol $a(k)$ entspricht, und $\tau_k$ eine Zufallsvariable ist, die einen Rauschwert darstellt, hervorgegangen aus einer Filterung des Rauschens der multiplen Zugriffe und des thermischen Rauschens, und

- V der endliche Grenzwert der Varianz der Zufallsvariablen $\tau_k$ ist, wobei $\beta$ der nachfolgenden Formel genügt:

$$\beta = \frac{p_k}{\sigma^2} \frac{\left(\displaystyle\int_0^1 \frac{\left|h\left(e^{2i\pi f}\right)\right|^2}{\left|h\left(e^{2i\pi f}\right)\right|^2 + \dfrac{\sigma^2}{\alpha \bar{p}}} df\right)}{\displaystyle\int_0^1 \frac{df}{\left|h\left(e^{j2\pi f}\right)\right|^2 + \dfrac{\sigma^2}{\alpha \bar{p}}}}$$

wobei

- $h(e^{2i\pi f})$ die Frequenzantwort des Kanals ist,
- $\bar{p}$ die mittlere Leistung ist, die der Gesamtheit der verwendeten $K$ Spreizungscodes zugeordnet ist,
- $p_k$ die Leistung ist, die dem Spreizungscode des Benutzers vom Rang k zugeordnet ist,

- $\sigma^2$ die Varianz des thermischen Rauschens ist,
- $\tilde{y}(k)$ ein normiertes geschätztes komplexes Symbol derart ist, dass $\tilde{y}(k) = y(k) / \eta$,
- $\lambda$ ein komplexes Symbol der Referenz der Konstellation MAQ ist, die der Modulation MAQ-M zugeordnet ist,
- $S^{(1)}I,q$ eine Unterteilung der komplexen Ebene ist, die die Gesamtheit der komplexen Referenzsymbole mit einer "1" bei der Position (I, q) eingruppiert,
- $S^{(0)}I,q$ eine Unterteilung der komplexen Ebene ist, die die Gesamtheit der komplexen Referenzsymbole mit einer "0" bei der Position (I, q) eingruppiert,
- $S^{(1)}Q,p$ eine Unterteilung der komplexen Ebene ist, die die Gesamtheit der komplexen Referenzsymbole mit einer "1" bei der Position (Q, p) eingruppiert,
- $S^{(0)}Q,p$ eine Unterteilung der komplexen Ebene ist, die die Gesamtheit der komplexen Referenzsymbole mit einer "0" bei der Position (Q, p) eingruppiert.

3. Verfahren zur weichen Demodulation mittels Berechnung des Wahrscheinlichkeitsverhältnislogarithmus von geschätzten komplexen Symbolen (y(1), y(2), ..., y(k), ..., y(K)), die ausgesandten komplexen Symbole (a(1), a(2), ..., a(k), ..., a(K)) entsprechen, welche in einem Signal enthalten sind, das von einem Multiträgersender mit multiplem Zugriff durch Verteilung von Codes ausgesandt ist und durch binäre Daten gebildet ist, welche durch Faltungscodierung codiert und gemäß einer Modulation MAQ-M quadraturmoduliert sind, wobei M eine ganze Zahl gleich $2^m$ ist, und m eine ganze Zahl größer oder gleich 1 ist, wobei ein ausgesandtes komplexes Symbol a(k) vom Rang k, k = 1, 2, ..., K, gespreizt ist durch einen Spreizungscode, der einem Benutzer vom Rang k zugeordnet ist, wobei die durch Faltungscodierung codierten binären Daten für den Benutzer vom Rang k eine Bitsequenz {bI, 1; bI, 2; ..., bI, q; ..., bI, r; bQ, 1; bQ, 2; ..., bQ, p; ..., bQ, s} bilden, wobei das Bit bI, q das q-te Bit ist, das verwendet wird zum Modulieren eines Teils in Phase des ausgesandten Signals, und das Bit bQ, p das p-te Bit ist, das verwendet wird zum Modulieren eines Teils in Quadratur des ausgesandten Signals, **dadurch gekennzeichnet, dass** es eine Berechnung des Wahrscheinlichkeitsverhältnislogarithmus LRV (bI, q) des Bits bI, q sowie eine Berechnung des Wahrscheinlichkeitsverhältnislogarithmus LRV (bQ, p) des Bits bQ, p umfasst, bei der die jeweiligen folgenden Formeln verwendet werden:

$$\mathrm{LRV(bI, q)} = \ln \frac{\displaystyle\sum_{\lambda \in S_{I,q}^{(1)}} \exp\left(-\frac{1}{2}\beta|\tilde{y}(k) - \lambda|^2\right)}{\displaystyle\sum_{\lambda \in S_{I,q}^{(0)}} \exp\left(-\frac{1}{2}\beta|\tilde{y}(k) - \lambda|^2\right)}$$

und

$$\mathrm{LRV(bQ, p)} = \ln \frac{\displaystyle\sum_{\lambda \in S_{Q,p}^{(1)}} \exp\left(-\frac{1}{2}\beta|\tilde{y}(k) - \lambda|^2\right)}{\displaystyle\sum_{\lambda \in S_{Q,p}^{(0)}} \exp\left(-\frac{1}{2}\beta|\tilde{y}(k) - \lambda|^2\right)}$$

mit:

- $\beta = \eta^2 / V$, wobei

- $\eta$ der endliche Grenzwert einer Zufallsvariablen $\eta_k$ ist, wenn die Gesamtzahl K von Spreizungscodes und die Länge N der Spreizungscodes gegen Unendlich streben und die Größe $\alpha = K / N$ kleiner oder gleich 1 ist, derart, dass:

$$y(k) = \eta_k\, a(k) + \tau_k$$

wobei $y(k)$ das geschätzte komplexe Symbol vom Rang $k$ ist, das dem ausgesandten komplexen Symbol $a(k)$ entspricht, und $\tau_k$ eine Zufallsvariable ist, die einen Rauschwert darstellt, hervorgegangen aus einer Filterung des Rauschens der multiplen Zugriffe und des thermischen Rauschens, und
- V der endliche Grenzwert der Varianz der Zufallsvariablen $\tau_k$ ist, wobei $\beta$ der nachfolgenden Formel genügt:

$$1 = \int_0^1 \frac{1}{\dfrac{\sigma^2}{\left|h\left(e^{j2\pi f}\right)\right|^2} A(\alpha,\, p_k,\, \beta) + \alpha.B(\alpha,\, p_k,\, \beta)}\, df$$

mit:

$$A(\alpha,\, p_k,\, \beta) = (1 - \alpha)\frac{\beta}{p_k} + \alpha.\beta.m(p_k,\, \beta) +$$

$$B(\alpha,\, p_k,\, \beta) = 1 - p_k.m(p_k,\, \beta)$$

$$m(p_k,\, \beta) = \int_{-\infty}^{+\infty} \frac{\mu_{power}(u)}{p_k + \beta.u}\, du$$

wobei:

- $\mu_{power}(p)$ der Leistungsverteilungsgrenzwert bezüglich der verschiedenen Leistungen ist, die den verschiedenen Spreizungscodes zugeordnet sind, wenn $N$ und $K$ gegen Unendlich streben, wobei $\alpha = K / N$ konstant bleibt,
- $h(e^{2i\pi f})$ die Frequenzantwort des Kanals ist,
- $p_k$ die Leistung ist, die dem Spreizungscode des Benutzers vom Rang k zugeordnet ist,
- $\tilde{y}(k)$ ein normiertes geschätztes komplexes Symbol derart ist, dass $\tilde{y}(k) = y(k) / \eta$,
- $\lambda$ ein komplexes Symbol der Referenz der Konstellation MAQ ist, die der Modulation MAQ-M zugeordnet ist,
- $S^{(1)}I,q$ eine Unterteilung der komplexen Ebene ist, die die Gesamtheit der komplexen Referenzsymbole mit einer "1" bei der Position (I, q) eingruppiert,
- $S^{(0)}I,q$ eine Unterteilung der komplexen Ebene ist, die die Gesamtheit der komplexen Referenzsymbole mit einer "0" bei der Position (I, q) eingruppiert,
- $S^{(1)}Q,p$ eine Unterteilung der komplexen Ebene ist, die die Gesamtheit der komplexen Referenzsymbole mit einer "1" bei der Position (Q, p) eingruppiert,
- $S^{(0)}Q,p$ eine Unterteilung der komplexen Ebene ist, die die Gesamtheit der komplexen Referenzsymbole mit einer "0" bei der Position (Q, p) eingruppiert.

4. Verfahren zur weichen Demodulation mittels Berechnung des Wahrscheinlichkeitsverhältnislogarithmus von geschätzten komplexen Symbolen (y(1), y(2), ..., y(k), ..., y(K)), die ausgesandten komplexen Symbole (a(1), a(2), ..., a(k), ..., a(K)) entsprechen, welche in einem Signal enthalten sind, das von einem Multiträgersender mit multiplem Zugriff durch Verteilung von Codes ausgesandt ist und durch binäre Daten gebildet ist, welche durch Faltungscodierung codiert und gemäß einer Modulation MAQ-M quadraturmoduliert sind, wobei M eine ganze Zahl gleich $2^{2a}$ ist, und $a$ eine ganze Zahl größer oder gleich 2 ist, wobei ein ausgesandtes komplexes Symbol a(k) vom Rang k, k = 1, 2, ..., K, gespreizt ist durch einen Spreizungscode, der einem Benutzer vom Rang k zugeordnet ist, wobei die durch Faltungscodierung codierten binären Daten für den Benutzer vom Rang k eine Bitsequenz {bI, 1; bI, 2; ...; bI, q; ...; bI, r; bQ, 1; bQ, 2; ...; bQ, p; ...; bQ, s} bilden, wobei das Bit bI, q das q-te Bit ist, das verwendet wird zum Modulieren eines Teils in Phase des ausgesandten Signals, und das Bit bQ, p das p-te Bit ist, das verwendet wird zum Modulieren eines Teils in Quadratur des ausgesandten Signals, **dadurch gekennzeichnet, dass** es eine Berechnung des Wahrscheinlichkeitsverhältnislogarithmus LRV (bI, q) des Bits bI, q sowie eine Berechnung des Wahrscheinlichkeitsverhältnislogarithmus LRV (bQ, p) des Bits bQ, p umfasst, bei der die jeweiligen folgenden Formeln verwendet werden:

$$LRV\ (bI,q)\ =\ \beta\ x\ M_{I,q}\ ,$$

mit

$M_{I,q} = \tilde{y}_I(k)$ für q = 1, und
$M_{I,q} = - |M_{I,q-1}| + m_{I,q}$ für q > 1,

wobei $\tilde{y}_I(k)$ die Komponente in Phase des normierten geschätzten komplexen Symbols $\tilde{y}(k)$ ist, und $m_{I,q}$ der halbe Abstand zwischen den Unterteilungen der komplexen Ebene $S^{(0)}I,q$ und $S^{(1)}I,q$ ist, und

$$LRV\ (bQ,\ p)\ =\ \beta\ x\ M_{Q,\ p},$$

mit

$M_{Q,p} = \tilde{y}_Q(k)$ für p = 1 und
$M_{Q,p} = - |M_{Q,p-1}| + m_{Q,p}$ für p > 1,

wobei $\tilde{y}_Q(k)$ die Komponente in Quadratur des normierten komplexen Symbols $\tilde{y}(k)$ ist, und $m_{Q,p}$ der halbe Abstand zwischen den Unterteilungen der komplexen Ebene $S^{(0)}Q,p$ und $S^{(1)}Q,p$ ist,
und mit:

- $\beta = \eta^2 / V,$ wobei

  - $\eta$ der endliche Grenzwert einer Zufallsvariablen $\eta_k$ ist, wenn die Gesamtzahl K von Spreizungscodes und die Länge N der Spreizungscodes gegen Unendlich streben und die Größe $\alpha = K / N$ kleiner oder gleich 1 ist, derart, dass:

$$y(k) = \eta_k\, a(k) + \tau_k$$

  wobei $y(k)$ das geschätzte komplexe Symbol vom Rang $k$ ist, das dem ausgesandten komplexen Symbol $a(k)$ entspricht, und $\tau_k$ eine Zufallsvariable ist, die einen Rauschwert darstellt, hervorgegangen aus einer Filterung des Rauschens der multiplen Zugriffe und des thermischen Rauschens, und
  - $V$ der endliche Grenzwert der Varianz der Zufallsvariablen $\tau_k$ ist, wobei $\beta$ der nachfolgenden Formel genügt:

$$\beta = p_k \frac{\left( \int_0^1 \left|h\left(e^{2i\pi f}\right)\right|^2 df \right)}{\alpha \overline{p} \left( \frac{\int_0^1 \left|h\left(e^{2i\pi f}\right)\right|^4 df}{\int_0^1 \left|h\left(e^{2i\pi f}\right)\right|^2 df} - \int_0^1 \left|h\left(e^{2i\pi f}\right)\right|^2 df \right) + \sigma^2}$$

  wobei

    - $h(e^{2i\pi f})$ die Frequenzantwort des Kanals ist,
    - $\overline{p}$ die mittlere Leistung ist, die der Gesamtheit der $K$ Spreizungscodes zugeordnet ist,

- $p_k$ die Leistung ist, die dem Spreizungscode des Benutzers vom Rang k zugeordnet ist,
- $\sigma^2$ die Varianz des thermischen Rauschens ist,
- $\tilde{y}(k)$ ein normiertes geschätztes komplexes Symbol derart ist, dass $\tilde{y}(k) = y(k) / \eta$,
- $\lambda$ ein komplexes Symbol der Referenz der Konstellation MAQ ist, die der Modulation MAQ-M zugeordnet ist,
- $S^{(1)}I,q$ eine Unterteilung der komplexen Ebene ist, die die Gesamtheit der komplexen Referenzsymbole mit einer "1" bei der Position (I, q) eingruppiert,
- $S^{(0)}I,q$ eine Unterteilung der komplexen Ebene ist, die die Gesamtheit der komplexen Referenzsymbole mit einer "0" bei der Position (I, q) eingruppiert,
- $S^{(1)}Q,p$ eine Unterteilung der komplexen Ebene ist, die die Gesamtheit der komplexen Referenzsymbole mit einer "1" bei der Position (Q, p) eingruppiert,
- $S^{(0)}Q,p$ eine Unterteilung der komplexen Ebene ist, die die Gesamtheit der komplexen Referenzsymbole mit einer "0" bei der Position (Q, p) eingruppiert.

**5.** Verfahren zur weichen Demodulation mittels Berechnung des Wahrscheinlichkeitsverhältnislogarithmus von geschätzten komplexen Symbolen (y(1), y(2), ..., y(k), ..., y(K)), die ausgesandten komplexen Symbole (a(1), a(2), ..., a(k), ..., a(K)) entsprechen, welche in einem Signal enthalten sind, das von einem Multiträgersender mit multiplem Zugriff durch Verteilung von Codes ausgesandt ist und durch binäre Daten gebildet ist, welche durch Faltungscodierung codiert und gemäß einer Modulation MAQ-M quadraturmoduliert sind, wobei M eine ganze Zahl gleich $2^{2a}$ ist, und $a$ eine ganze Zahl größer oder gleich 2 ist, wobei ein ausgesandtes komplexes Symbol a(k) vom Rang k, k = 1, 2, ..., K, gespreizt ist durch einen Spreizungscode, der einem Benutzer vom Rang k zugeordnet ist, wobei die durch Faltungscodierung codierten binären Daten für den Benutzer vom Rang k eine Bitsequenz {bI, 1; bI, 2; ..., bI, q; ..., bI, r; bQ, 1; bQ, 2; ..., bQ, p; ..., bQ, s} bilden, wobei das Bit bI, q das q-te Bit ist, das verwendet wird zum Modulieren eines Teils in Phase des ausgesandten Signals, und das Bit bQ, p das p-te Bit ist, das verwendet wird zum Modulieren eines Teils in Quadratur des ausgesandten Signals, **dadurch gekennzeichnet, dass** es eine Berechnung des Wahrscheinlichkeitsverhältnislogarithmus LRV (bI, q) des Bits bI, q sowie eine Berechnung des Wahrscheinlichkeitsverhältnislogarithmus LRV (bQ, p) des Bits bQ, p umfasst, bei der die jeweiligen folgenden Formeln verwendet werden:

$$\mathrm{LRV}\ (b_{I,q}) = \beta \times M_{I,q}\ ,$$

mit

$M_{I,q} = \tilde{y}_I (k)$ für q = 1, und
$M_{I,q} = - |M_{r,q-1}| + m_{I,q}$ für q > 1,

wobei $\tilde{y}_I(k)$ die Komponente in Phase des normierten geschätzten komplexen Symbols $\tilde{y}(k)$ ist, und $m_{I,q}$ der halbe Abstand zwischen den Unterteilungen der komplexen Ebene $S^{(0)}I, q$ und $S^{(1)}I, q$ ist, und

$$\mathrm{LRV}\ (b_Q,\ p) = \beta \times M_{Q,\ p},$$

mit

$M_{Q,p} = \tilde{y}_Q^{(k)}$ für p = 1, und
$M_{Q,p} = - |M_{Q,p-1}| + m_{Q,P}$ für p > 1,

wobei $\tilde{y}_Q(k)$ die Komponente in Quadratur des normierten komplexen Symbols $\tilde{y}(k)$ ist, und $m_{Q,p}$ der halbe Abstand zwischen den Unterteilungen der komplexen Ebene $S^{(0)}_{Q,p}$ und $S^{(1)}Q,p$ ist,
und mit:

- $\beta = \eta^2 / V$, wobei

- $\eta$ der endliche Grenzwert einer Zufallsvariablen $\eta_k$ ist, wenn die Gesamtzahl K von Spreizungscodes und die Länge N der Spreizungscodes gegen Unendlich streben und die Größe $\alpha = K / N$ kleiner oder gleich 1 ist, derart, dass:

$$y(k) = \eta_k \, a(k) + \tau_k$$

wobei $\tilde{y}(k)$ das geschätzte komplexe Symbol vom Rang *k* ist, das dem ausgesandten komplexen Symbol a(*k*) entspricht, und $\tau_k$ eine Zufallsvariable ist, die einen Rauschwert darstellt, hervorgegangen aus einer Filterung des Rauschens der multiplen Zugriffe und des thermischen Rauschens, und

- V der endliche Grenzwert der Varianz der Zufallsvariablen $\tau_k$ ist, wobei $\beta$ der nachfolgenden Formel genügt:

$$\beta = \frac{p_k}{\sigma^2} \frac{\left( \displaystyle\int_0^1 \frac{\left| h\!\left(e^{2i\pi f}\right) \right|^2}{\left| h\!\left(e^{2i\pi f}\right) \right|^2 + \dfrac{\sigma^2}{\alpha \overline{p}}} df \right)}{\displaystyle\int_0^1 \frac{df}{\left| h\!\left(e^{j2\pi f}\right) \right|^2 + \dfrac{\sigma^2}{\alpha \overline{p}}}}$$

wobei

- $h(e^{2i\pi f})$ die Frequenzantwort des Kanals ist,
- $\overline{p}$ die mittlere Leistung ist, die der Gesamtheit der *K* Spreizungscodes zugeordnet ist,
- $p_k$ die Leistung ist, die dem Spreizungscode des Benutzers vom Rang k zugeordnet ist,
- $\sigma^2$ die Varianz des thermischen Rauschens ist,
- $\tilde{y}(k)$ ein normiertes geschätztes komplexes Symbol derart ist, dass $\tilde{y}(k) = y(k) / \eta$,
- $\lambda$ ein komplexes Symbol der Referenz der Konstellation MAQ ist, die der Modulation MAQ-M zugeordnet ist,
- $S^{(1)}I, q$ eine Unterteilung der komplexen Ebene ist, die die Gesamtheit der komplexen Referenzsymbole mit einer "1" bei der Position (I, q) eingruppiert,
- $S^{(0)}I, q$ eine Unterteilung der komplexen Ebene ist, die die Gesamtheit der komplexen Referenzsymbole mit einer "0" bei der Position (I, q) eingruppiert,
- $S^{(1)}Q,p$ eine Unterteilung der komplexen Ebene ist, die die Gesamtheit der komplexen Referenzsymbole mit einer "1" bei der Position (Q, p) eingruppiert,
- $S^{(0)}Q,p$ eine Unterteilung der komplexen Ebene ist, die die Gesamtheit der komplexen Referenzsymbole mit einer "0" bei der Position (Q, p) eingruppiert.

6. Verfahren zur weichen Demodulation mittels Berechnung des Wahrscheinlichkeitsverhältnislogarithmus von geschätzten komplexen Symbolen (y(1), y(2), ..., y(k), ..., y(K)), die ausgesandten komplexen Symbole (a(1), a(2), ..., a(k), ..., a(K)) entsprechen, welche in einem Signal enthalten sind, das von einem Multiträgersender mit multiplem Zugriff durch Verteilung von Codes ausgesandt ist und durch binäre Daten gebildet ist, welche durch Faltungscodierung codiert und gemäß einer Modulation MAQ-M quadraturmoduliert sind, wobei M eine ganze Zahl gleich $2^{2a}$ ist, und *a* eine ganze Zahl größer oder gleich 2 ist, wobei ein ausgesandtes komplexes Symbol a(k) vom Rang k, k = 1, 2, ..., K, gespreizt ist durch einen Spreizungscode, der einem Benutzer vom Rang k zugeordnet ist, wobei die durch Faltungscodierung codierten binären Daten für den Benutzer vom Rang k eine Bitsequenz {bI, 1; bI, 2; ..., bI, q; ...; bI, r; bQ, 1; bQ, 2; ...; bQ, p; ...; bQ, s} bilden, wobei das Bit bI, q das q-te Bit ist, das verwendet wird zum Modulieren eines Teils in Phase des ausgesandten Signals, und das Bit bQ, p das p-te Bit ist, das verwendet wird zum Modulieren eines Teils in Quadratur des ausgesandten Signals, **dadurch gekennzeichnet, dass** es eine Berechnung des Wahrscheinlichkeitsverhältnislogarithmus LRV (bI, q) des Bits bI, q sowie eine Berechnung des Wahrscheinlichkeitsverhältnislogarithmus LRV (bQ, p) des Bits bQ, p umfasst, bei der die jeweiligen folgenden Formeln verwendet werden:

$$\mathrm{LRV}\ (bI, q)\ =\ \beta\ \times\ M_{I, q}\ ,$$

mit

$M_{I,q} = \tilde{y}_I(k)$ für q = 1, und
$M_{I,q} = -|M_{I,q-1}| + m_{I,q}$ für q > 1,

wobei $\tilde{y}_I(k)$ die Komponente in Phase des normierten geschätzten komplexen Symbols $\tilde{y}(k)$ ist, und $m_{I,q}$ der halbe Abstand zwischen den Unterteilungen der komplexen Ebene $S^{(0)}I, q$ und $S^{(1)}I, q$ ist, und

$$\mathrm{LRV}\ (bQ,\ p)\ =\ \beta\ \times\ M_{Q,\ p},$$

mit

$M_{Q,p} = \tilde{y}_Q(k)$ für p = 1, und
$M_{Q,p} = -|M_{Q,p-1}| + m_{Q,p}$ für p > 1,

wobei $\tilde{y}_Q(k)$ die Komponente in Quadratur des normierten komplexen Symbols $\tilde{y}(k)$ ist, und $m_{Q,p}$ der halbe Abstand zwischen den Unterteilungen der komplexen Ebene $S^{(0)}_{Q,p}$ und $S^{(1)}Q,p$ ist,
und mit:

- $\beta = \eta^2 / V$, wobei

  - $\eta$ der endliche Grenzwert einer Zufallsvariablen $\eta_k$ ist, wenn die Gesamtzahl K von Spreizungscodes und die Länge N der Spreizungscodes gegen Unendlich streben und die Größe $\alpha = K / N$ kleiner oder gleich 1 ist, derart, dass:

$$y(k) = \eta_k\, a(k) + \tau_k$$

wobei $\tilde{y}(k)$ das geschätzte komplexe Symbol vom Rang $k$ ist, das dem ausgesandten komplexen Symbol $a(k)$ entspricht, und $\tau_k$ eine Zufallsvariable ist, die einen Rauschwert darstellt, hervorgegangen aus einer Filterung des Rauschens der multiplen Zugriffe und des thermischen Rauschens, und
- V der endliche Grenzwert der Varianz der Zufallsvariablen $\tau_k$ ist, wobei $\beta$ der nachfolgenden Formel genügt:

$$1 = \int_{0}^{1} \frac{1}{\dfrac{\sigma^2}{\left|h\left(e^{j2\pi f}\right)\right|^2} A(\alpha, p_k, \beta) + \alpha.B(\alpha, p_k, \beta)} df$$

mit:

$$A(\alpha, p_k, \beta) = (1 - \alpha)\frac{\beta}{p_k} + \alpha.\beta.m(p_k, \beta)$$

$$B(\alpha, p_k, \beta) = 1 - p_k.m(p_k, \beta)$$

$$m(p_k, \beta) = \int_{-\infty}^{+\infty} \frac{\mu_{power}(u)}{p_k + \beta.u} du$$

wobei:

- $\mu_{power}(p)$ der Leistungsverteilungsgrenzwert bezüglich der verschiedenen Leistungen ist, die den verschiedenen Spreizungscodes zugeordnet sind, wenn $N$ und $K$ gegen Unendlich streben, wobei $\alpha$ = $K$ / $N$ konstant bleibt,
- $h(e^{2i\pi f})$ die Frequenzantwort des Kanals ist,
- $p_k$ die Leistung ist, die dem Spreizungscode des Benutzers vom Rang k zugeordnet ist,
- $\tilde{y}(k)$ ein normiertes geschätztes komplexes Symbol derart ist, dass $\tilde{y}(k) = y(k) / \eta$,
- $\lambda$ ein komplexes Symbol der Referenz der Konstellation MAQ ist, die der Modulation MAQ-M zugeordnet ist,
- $S^{(1)}I, q$ eine Unterteilung der komplexen Ebene ist, die die Gesamtheit der komplexen Referenzsymbole mit einer "1" bei der Position (I, q) eingruppiert,
- $S^{(0)}I, q$ eine Unterteilung der komplexen Ebene ist, die die Gesamtheit der komplexen Referenzsymbole mit einer "0" bei der Position (I, q) eingruppiert,
- $S^{(1)}Q, p$ eine Unterteilung der komplexen Ebene ist, die die Gesamtheit der komplexen Referenzsymbole mit einer "1" bei der Position (Q, p) eingruppiert,
- $S^{(0)}Q, p$ eine Unterteilung der komplexen Ebene ist, die die Gesamtheit der komplexen Referenzsymbole mit einer "0" bei der Position (Q, p) eingruppiert.

**7.** Verfahren zur weichen Demodulation mittels Berechnung des Wahrscheinlichkeitsverhältnislogarithmus von geschätzten komplexen Symbolen (y(1), y(2), ..., y(k), ..., y(K)), die ausgesandten komplexen Symbole (a(1), a(2), ..., a(k), ..., a(K)) entsprechen, welche in einem Signal enthalten sind, das von einem Multiträgersender mit multiplem Zugriff durch Verteilung von Codes ausgesandt ist und durch binäre Daten gebildet ist, welche durch Faltungscodierung codiert und gemäß einer Modulation MAQ-M quadraturmoduliert sind, wobei M eine ganze Zahl gleich $2^{2a}$ ist, und $a$ eine ganze Zahl größer oder gleich 2 ist, wobei ein ausgesandtes komplexes Symbol a(k) vom Rang k, k = 1, 2, ..., K, gespreizt ist durch einen Spreizungscode, der einem Benutzer vom Rang k zugeordnet ist, wobei die durch Faltungscodierung codierten binären Daten für den Benutzer vom Rang keine Bitsequenz {bI, 1; bI, 2; ...; bI, q; ...; bI, r; bQ, 1; bQ, 2; ...; bQ, p; ...; bQ, s} bilden, wobei das Bit bI, q das q-te Bit ist, das verwendet wird zum Modulieren eines Teils in Phase des ausgesandten Signals, und das Bit bQ, p das p-te Bit ist, das verwendet wird zum Modulieren eines Teils in Quadratur des ausgesandten Signals, **dadurch gekennzeichnet, dass** es eine Berechnung des Wahrscheinlichkeitsverhältnislogarithmus LRV (bI, q) des Bits bI, q sowie eine Berechnung des Wahrscheinlichkeitsverhältnislogarithmus LRV (bQ, p) des Bits bQ, p umfasst, bei der die jeweiligen folgenden Formeln verwendet werden:

$$\mathrm{LRV}\ (\mathrm{bI}, \mathrm{q})\ =\ (\eta/V)\, Z_{I,q},$$

und

$$\mathrm{LRV}\ (\mathrm{bQ},\ \mathrm{p})\ =\ (\eta/V)\, Z_{Q,p},$$

mit

$$\eta\ =\ \sqrt{p_k}\int_0^1 \left| h\!\left(e^{2i\pi f}\right)\right|^2 df\ \ ,$$

wobei $\eta$ der endliche Grenzwert einer Zufallsvariablen $\eta_k$ ist, wenn die *Gesamtzahl K* von Spreizungscodes und die Länge *N* der Spreizungscodes gegen Unendlich streben und die Größe $\alpha = K$ / *N* kleiner oder gleich 1 ist, derart, dass:

$$y(k) = \eta_k a(k) + \tau_k$$

wobei $\tilde{y}(k)$ das geschätzte komplexe Symbol vom Rang *k* ist, das dem ausgesandten komplexen Symbol a(k)

entspricht, und $\tau_k$ eine Zufallsvariable ist, die einen Rauschwert darstellt, der hervorgegangen ist aus einer Filterung des Rauschens der multiplen Zugriffe und des thermischen Rauschens, und

$$V = \alpha\bar{p}\left(\int_0^1 \left|h\left(e^{2i\pi f}\right)\right|^4 df - \left(\int_0^1 \left|h\left(e^{2i\pi f}\right)\right|^2 df\right)^2\right) + \sigma^2 \int_0^1 \left|h\left(e^{2i\pi f}\right)\right|^2 df$$

wobei $V$ der endliche Grenzwert der Varianz der Zufallsvariablen $\tau_k$ ist,
wobei

- $h(e^{2i\pi f})$ die Frequenzantwort des Kanals ist,
- $p_k$ die Leistung ist, die dem Spreizungscode des Benutzers vom Rang k zugeordnet ist,
- $\bar{p}$ die mittlere Leistung ist, die der Gesamtheit der $K$ Spreizungscodes zugeordnet ist,
- $\sigma^2$ die Varianz des thermischen Rauschens ist,
- $Z_{I,q} = y_I$ für q = 1, wobei $y_I$ die Komponente in Phase des geschätzten komplexen Symbols $\tilde{y}(k)$ ist,
- $Z_{I,q} = -|Z_{I,q-1}| + \eta x m_{I,q}$ für q > 1, wobei $m_{I,q}$ der halbe Abstand zwischen den Unterteilungen der komplexen Ebene $S^{(1)}I, q$ und $S^{(0)}I, q$ derart ist, dass:

  - $S^{(1)}I,q$ eine Unterteilung der komplexen Ebene ist, die die Gesamtheit der komplexen Referenzsymbole mit einer "1" bei der Position (I,q) eingruppiert, und
  - $S^{(0)}I,q$ eine Unterteilung der komplexen Ebene ist, die die Gesamtheit der komplexen Referenzsymbole mit einer "0" bei der Position (I, q) eingruppiert,

- $Z_{Q,p} = y_Q$ für p = 1, wobei $y_Q$ die Komponente in Quadratur des geschätzten komplexen Symbols $y(k)$ ist,
- $Z_{Q,p} = -|Z_{Q,p-1}| + \eta x m_{Q,p}$ für p > 1, wobei $m_{Q,p}$ der halbe Abstand zwischen den Unterteilungen der komplexen Ebene $S^{(1)}Q,p$ und $S^{(0)}Q,p$ derart ist, dass:

  - $S^{(1)}Q,p$ eine Unterteilung der komplexen Ebene ist, die die Gesamtheit der komplexen Referenzsymbole mit einer "1" bei der Position (Q,p) eingruppiert, und
  - $S^{(0)}Q,p$ eine Unterteilung der komplexen Ebene ist, die die Gesamtheit der komplexen Referenzsymbole mit einer "0" bei der Position (Q,p) eingruppiert.

8. Verfahren zur weichen Demodulation mittels Berechnung des Wahrscheinlichkeitsverhältnislogarithmus von geschätzten komplexen Symbolen (y(1), y(2), ..., y(k), ..., y(K)), die ausgesandten komplexen Symbole (a(1), a(2), ..., a(k), ..., a(K)) entsprechen, welche in einem Signal enthalten sind, das von einem Multiträgersender mit multiplem Zugriff durch Verteilung von Codes ausgesandt ist und durch binäre Daten gebildet ist, welche durch Faltungscodierung codiert und gemäß einer Modulation MAQ-M quadraturmoduliert sind, wobei M eine ganze Zahl gleich $2^{2a}$ ist, und a eine ganze Zahl größer oder gleich 2 ist, wobei ein ausgesandtes komplexes Symbol a(k) vom Rang k, k = 1, 2, ..., K, gespreizt ist durch einen Spreizungscode, der einem Benutzer vom Rang k zugeordnet ist, wobei die durch Faltungscodierung codierten binären Daten für den Benutzer vom Rang k eine Bitsequenz {bI, 1; bI, 2; ..., bI, q; ..., bI, r; bQ, 1; bQ, 2; ..., bQ, p; ..., bQ, s} bilden, wobei das Bit bI, q das q-te Bit ist, das verwendet wird zum Modulieren eines Teils in Phase des ausgesandten Signals, und das Bit bQ, p das p-te Bit ist, das verwendet wird zum Modulieren eines Teils in Quadratur des ausgesandten Signals, **dadurch gekennzeichnet, dass** es eine Berechnung des Wahrscheinlichkeitsverhältnislogarithmus LRV (bI, q) des Bits bI, q sowie eine Berechnung des Wahrscheinlichkeitsverhältnislogarithmus LRV (bQ, p) des Bits bQ, p umfasst, bei der die jeweiligen folgenden Formeln verwendet werden:

$$LRV\ (bI, q) = (\eta/V) Z_{I,q},$$

und

$$\mathrm{LRV}\ (bQ,\ p)\ =\ (\eta/V)\,Z_{Q,p},$$

mit

$$\eta = \int_0^1 \frac{\left|h\!\left(e^{2i\pi f}\right)\right|^2}{\left|h\!\left(e^{2i\pi f}\right)\right|^2 + \dfrac{\sigma^2}{\alpha\bar{p}}}\,df$$

wobei $\eta$ der endliche Grenzwert einer Zufallsvariablen $\eta_k$ ist, wenn die *Gesamtzahl K* von Spreizungscodes und die Länge *N* der Spreizungscodes gegen Unendlich streben und die Größe $\alpha = K\,/\,N$ kleiner oder gleich 1 ist, derart, dass:

$$y(k) = \eta_k a(k) + \tau_k$$

wobei *y*(*k*) das geschätzte komplexe Symbol vom Rang *k* ist, das dem ausgesandten komplexen Symbol a(*k*) entspricht, und $\tau_k$ eine Zufallsvariable ist, die einen Rauschwert darstellt, der hervorgegangen ist aus einer Filterung des Rauschens der multiplen Zugriffe und des thermischen Rauschens, und

$$V = \alpha\bar{p}\eta(1 - \eta)$$

wobei *V* der endliche Grenzwert der Varianz der Zufallsvariablen $\tau_k$ ist,
wobei

- $h(e^{2i\pi f})$ die Frequenzantwort des Kanals ist,
- $\bar{p}$ die mittlere Leistung ist, die der Gesamtheit der *K* Spreizungscodes zugeordnet ist,
- $\sigma^2$ die Varianz des thermischen Rauschens ist,
- $Z_{I,q} = y_I$ für *q* = 1, wobei $y_I$ die Komponente in Phase des geschätzten komplexen Symbols *y*(*k*) ist,
- $Z_{I,q} = -|Z_{I,q-1}| + \eta x m_{I,q}$ für *q* > 1, wobei $m_{I,q}$ der halbe Abstand zwischen den Unterteilungen der komplexen Ebene $S^{(1)}I, q$ und $S^{(0)}I, q$ derart ist, dass:

  - $S^{(1)}I,q$ eine Unterteilung der komplexen Ebene ist, die die Gesamtheit der komplexen Referenzsymbole mit einer "1" bei der Position (*I,q*) eingruppiert, und
  - $S^{(0)}I,q$ eine Unterteilung der komplexen Ebene ist, die die Gesamtheit der komplexen Referenzsymbole mit einer "0" bei der Position (*I, q*) eingruppiert,

- $Z_{Q,p} = y_Q$ für *p* = 1, wobei $y_Q$ die Komponente in Quadratur des geschätzten komplexen Symbols *y*(*k*) ist,
- $Z_{Q,p} = -|Z_{Q,p-1}| + \eta x m_{Q,p}$ für *p* > 1, wobei $m_{Q,p}$ der halbe Abstand zwischen den Unterteilungen der komplexen Ebene $S^{(1)}Q,p$ und $S^{(0)}Q,p$ derart ist, dass:

  - $S^{(1)}Q,p$ eine Unterteilung der komplexen Ebene ist, die die Gesamtheit der komplexen Referenzsymbole mit einer "1" bei der Position (*Q,p*) eingruppiert, und
  - $S^{(0)}Q,p$ eine Unterteilung der komplexen Ebene ist, die die Gesamtheit der komplexen Referenzsymbole mit einer "0" bei der Position (Q,p) eingruppiert.

**9.** Verfahren zur Decodierung von geschätzten komplexen Symbolen (y(1), y(2), ...,y(k), ...,y(K)), umfassend einen Schritt der weichen Demodulation durch Berechnung eines Wahrscheinlichkeitsverhältnislogarithmus (LRV) und einen Schritt der Decodierung durch einen Decodierungsalgorithmus mit weichen Eingaben zur Berechnung, ausgehend vom Wahrscheinlichkeitsverhältnislogarithmus (LRV), einer Sequenz von Bits, die Bit für Bit einer Sequenz von Bits entsprechen, die durch Faltungscodierung codiert sind, **dadurch gekennzeichnet, dass** der Schritt der weichen Demodulierung mittels eines Verfahrens nach einem der Ansprüche 1 bis 8 durchgeführt wird.

**10.** Verfahren zur Decodierung nach Anspruch 9, **dadurch gekennzeichnet, dass** der Decodierungsalgorithmus mit weichen Eingaben der Viterbi-Algorithmus mit weichen Eingaben ist.

**11.** Verfahren zur Decodierung nach Anspruch 10, **dadurch gekennzeichnet, dass** die Faltungscodierung eine Turbofaltungscodierung ist, und dass der Decodierungsalgorithmus mit weichen Eingaben der Viterbi-Algorithmus mit weichen Eingaben und Ausgaben ist, der ein Kriterium maximaler Wahrscheinlichkeit verwendet, oder der Algorithmus zur Maximierung der Wahrscheinlichkeit a posteriori, der ein a-posteriori-Maximumskriterium verwendet.

**Claims**

**1.** Method for the soft demapping, by Logarithm of the Likelihood Ratio calculation, of complex-valued symbols (y(1), y(2), ..., y(k), ..., y(K)) corresponding to transmitted complex symbols (a(1), a(2), ..., a(k), ..., a(K)) contained in a signal transmitted by a code division multiple access multi-carrier transmitter and constituted by binary data coded by convolutional coding and quadrature modulated according to a M-QAM modulation, where M is an integer equal to $2^m$ and m is an integer greater than or equal to 1, a complex symbol transmitted a(k) of rank k, k=1, 2, ..., K being spread by a spreading code associated with a user of rank k, the binary data coded by convolutional coding constituting, for the user of rank k, a sequence of bits {bI, 1; bI, 2; ..., bI,q; ..., bI,r; by, 1; bQ,2; ..., bQ, p; ..., bQ, s }, wherein the bit bI, q is the $q^{th}$ bit used to modulate an in-phase part of the transmitted signal and the bit bQ,p is the $p^{th}$ bit used to modulate a quadrature part of the transmitted signal, **characterised in that** it includes a Logarithm of the Likelihood Ratio LRV (bI,q) calculation of the bit bI,q and a Logarithm of the Likelihood Ratio LRV (bQ,p) calculation of the bit bQ,p which use the respective following formulas:

$$LRV(bI,q) = \ln \frac{\displaystyle\sum_{\lambda \in S_{I,q}^{(1)}} \exp\left(-\frac{1}{2}\beta\left|\widetilde{y}(k)-\lambda\right|^2\right)}{\displaystyle\sum_{\lambda \in S_{I,q}^{(0)}} \exp\left(-\frac{1}{2}\beta\left|\widetilde{y}(k)-\lambda\right|^2\right)}$$

and

$$LRV(bQ,p) = \ln \frac{\displaystyle\sum_{\lambda \in S_{Q,p}^{(1)}} \exp\left(-\frac{1}{2}\beta\left|\widetilde{y}(k)-\lambda\right|^2\right)}{\displaystyle\sum_{\lambda \in S_{Q,p}^{(0)}} \exp\left(-\frac{1}{2}\beta\left|\widetilde{y}(k)-\lambda\right|^2\right)}$$

with:

- $\beta = \eta^2/V$, where
- $\eta$ is the finite limit, when the total number K of spreading codes and the length N of the spreading codes tend towards infinity and the quantity $\alpha$=K/N is less than or equal to 1, of a random variable $\eta_k$ such that:

$$y(k) = \eta_k \, a(k) + \tau_k,$$

where y(k) is the complex-valued symbol of rank k which corresponds to the transmitted complex symbol a(k) and $\tau_k$ is a random variable representing a noise value produced by multiple access noise and thermal noise filtering,

- V is the finite limit of the variance of the random variable $\tau_k$, $\beta$ being given by the equation:

$$\beta = p_k \frac{\left(\int_0^1 \left|h\left(e^{2i\pi f}\right)\right|^2 df\right)}{\alpha \overline{p}\left(\frac{\int_0^1 \left|h\left(e^{2i\pi f}\right)\right|^4 df}{\int_0^1 \left|h\left(e^{2i\pi f}\right)\right|^2 df} - \int_0^1 \left|h\left(e^{2i\pi f}\right)\right|^2 df\right) + \sigma^2}$$

where

- h(e$^{2i\Pi f}$) is the channel frequency response
- p is the mean power associated with all the K spreading codes
- $p_k$ is the power associated with the spreading code of the user of rank k
- $\sigma^2$ is the thermal noise variance.
- $\tilde{y}$ (k) is a standardised complex-valued symbol such that $\tilde{y}$ (k) = y(k)/$\eta$,
- $\lambda$ is a reference complex symbol of QAM constellation associated with the M-QAM modulation,
- S$^{(1)}$I,q is a partition of the complex plane which brings together all the reference complex symbols having a "1" at the position (I, q),
- S$^{(0)}$I,q is a partition of the complex plane which brings together all the reference complex symbols having a "0" at the position (I, q),
- S$^{(1)}$Q,p is a partition of the complex plane which brings together all the reference complex symbols having a "1" at the position (Q, p),
- $S^{(0)}_{Q,p}$ is a partition of the complex plane which brings together all the reference complex symbols having a "0" at the position (Q, p).

2. Method for the soft demapping, by Logarithm of the Likelihood Ratio calculation, of complex-valued symbols (y(1), y(2), ..., y(k), ..., y(K)) corresponding to transmitted complex symbols (a(1), a(2), ..., a(k), ..., a(K)) contained in a signal transmitted by a code division multiple access multi-carrier transmitter and constituted by binary data coded by convolutional coding and quadrature modulated according to a M-QAM modulation, where M is an integer equal to 2$^m$ and m is an integer greater than or equal to 1, a complex symbol transmitted a (k) of rank k, k=1, 2, ..., K being spread by a spreading code associated with a user of rank k, the binary data coded by convolutional coding constituting, for the user of rank k, a sequence of bits {bI, 1; bI, 2; ...; bI,q; ...; bI,r; by, 1; bQ,2; ...; bQ, p; ...; bQ, s }, wherein the bit bI, q is the q$^{th}$ bit used to modulate an in-phase part of the transmitted signal and the bit bQ,p is the p$^{th}$ bit used to modulate a quadrature part of the transmitted signal, **characterised in that** it includes a Logarithm of the Likelihood Ratio LRV (bI,q) calculation of the bit bI,q and a Logarithm of the Likelihood Ratio LRV (bQ,p) calculation of the bit bQ,p which use the respective following formulas:

$$LRV(bI,q) = \ln \frac{\sum_{\lambda \in S_{I,q}^{(1)}} \exp\left(-\frac{1}{2}\beta\left|\tilde{y}(k) - \lambda\right|^2\right)}{\sum_{\lambda \in S_{I,q}^{(0)}} \exp\left(-\frac{1}{2}\beta\left|\tilde{y}(k) - \lambda\right|^2\right)}$$

and

$$LRV(bQ,p) = \ln \frac{\sum_{\lambda \in S_{Q,p}^{(1)}} \exp\left(-\frac{1}{2}\beta \left|\widetilde{y}(k)-\lambda\right|^2\right)}{\sum_{\lambda \in S_{Q,p}^{(0)}} \exp\left(-\frac{1}{2}\beta \left|\widetilde{y}(k)-\lambda\right|^2\right)}$$

with:

- $\beta = \eta^2/V$, where
- $\eta$ is the finite limit, when the total number K of spreading codes and the length N of the spreading codes tend towards infinity and the quantity $\alpha=K/N$ is less than or equal to 1, of a random variable $\eta_k$ such that:

$$y(k) = \eta_k \, a(k) + \tau_k,$$

where y(k) is the complex-valued symbol of rank k which corresponds to the transmitted complex symbol a(k) and $\tau_k$ is a random variable representing a noise value produced by multiple access noise and thermal noise filtering,
- V is the finite limit of the variance of the random variable $\tau_k$, $\beta$ being given by the equation:

$$\beta = \frac{p_k}{\sigma^2} \frac{\left( \int_0^1 \frac{\left|h\left(e^{2i\pi f}\right)\right|^2}{\left|h\left(e^{2i\pi f}\right)\right|^2 + \frac{\sigma^2}{\alpha\overline{p}}} df \right)}{\int_0^1 \frac{df}{\left|h\left(e^{j2\pi f}\right)\right|^2 + \frac{\sigma^2}{\alpha\overline{p}}}}$$

where

- $h(e^{2i\Pi f})$ is the channel frequency response
- $\overline{p}$ is the mean power associated with all the K spreading codes
- $p_k$ is a power associated with the spreading code of the user of rank k
- $\sigma^2$ is the thermal noise variance.
- $\widetilde{y}(k)$ is a standardised complex-valued symbol such that $\widetilde{y}(k) = y(k)/\eta$,
- $\lambda$ is a reference complex symbol of QAM constellation associated with the M-QAM modulation,
- $S^{(1)}$I,q is a partition of the complex plane which brings together all the reference complex symbols having a "1" at the position (I, q),
- $S^{(0)}$I,q is a partition of the complex plane which brings together all the reference complex symbols having a "0" at the position (I, q),
- $S^{(1)}$Q,p is a partition of the complex plane which brings together all the reference complex symbols having a "1" at the position (Q, p),
- $S^{(0)}_{Q,p}$ is a partition of the complex plane which brings together all the reference complex symbols having a "0" at the position (Q, p).

3. Method for the soft demapping, by Logarithm of the Likelihood Ratio calculation, of complex-valued symbols (y(1), y(2), ..., y(k), ..., y(K)) corresponding to transmitted complex symbols (a(1), a(2), ..., a(k), ..., a(K)) contained in a signal transmitted by a code division multiple access multi-carrier transmitter and constituted by binary data coded by convolutional coding and quadrature modulated according to a M-QAM modulation, where M is an integer equal to $2^m$ and m is an integer greater than or equal to 1, a complex symbol transmitted a(k) of rank k, k=1, 2, ..., K being spread by a spreading code associated with a user of rank k, the binary data coded by convolutional coding constituting, for the user of rank k, a sequence of bits {bl, 1; bl, 2; ..., bl,q; ..., bl,r; by, 1; bQ,2; ..., bQ, p; ..., bQ, s }, wherein the bit bl, q is the $q^{th}$ bit used to modulate an in-phase part of the transmitted signal and the bit bQ,p is the $p^{th}$ bit used to modulate a quadrature part of the transmitted signal, **characterised in that** it includes a Logarithm of the Likelihood Ratio LRV (bl,q) calculation of the bit bl,q and a Logarithm of the Likelihood Ratio LRV (bQ,p) calculation of the bit bQ,p which use the respective following formulas:

$$LRV(bI,q) = \ln \frac{\sum_{\lambda \in S_{I,q}^{(1)}} \exp\left(-\frac{1}{2}\beta\left|\tilde{y}(k)-\lambda\right|^2\right)}{\sum_{\lambda \in S_{I,q}^{(0)}} \exp\left(-\frac{1}{2}\beta\left|\tilde{y}(k)-\lambda\right|^2\right)}$$

and

$$LRV(bQ,p) = \ln \frac{\sum_{\lambda \in S_{Q,p}^{(1)}} \exp\left(-\frac{1}{2}\beta\left|\tilde{y}(k)-\lambda\right|^2\right)}{\sum_{\lambda \in S_{Q,p}^{(0)}} \exp\left(-\frac{1}{2}\beta\left|\tilde{y}(k)-\lambda\right|^2\right)}$$

with:

- $\beta = \eta^2/V$, where
- $\eta$ is the finite limit, when the total number K of spreading codes and the length N of the spreading codes tend towards infinity and the quantity $\alpha$=K/N is less than or equal to 1, of a random variable $\eta_k$ such that:

$$y(k) = \eta_k \, a(k) + \tau_k,$$

where y(k) is the complex-valued symbol of rank k which corresponds to the transmitted complex symbol a(k) and $\tau_k$ is a random variable representing a noise value produced by multiple access noise and thermal noise filtering,
- V is the finite limit of the variance of the random variable $\tau_k$, $\beta$ being given by the equation:

$$1 = \int_0^1 \frac{1}{\dfrac{\sigma^2}{\left|h\left(e^{j2\pi f}\right)\right|^2} A(\alpha, p_k, \beta) + \alpha.B(\alpha, p_k, \beta)} df$$

with:

$$A(\alpha, p_k, \beta) = (1 - \alpha)\frac{\beta}{p_k} + \alpha.\beta.m(p_k, \beta)$$

$B(\alpha,p_k, \beta) = 1 - P_k.m(p_k, \beta)$

$$m(p_k, \beta) = \int_{-\infty}^{+\infty} \frac{\mu_{power}(u)}{p_k + \beta.u} \, du$$

where:

- $\mu_{power}(p)$ is the limit power distribution in relation to the different powers associated with the different spreading codes, when N and K tend towards infinity, $\alpha$=K/N remaining constant,
- $h(e^{2i\Pi f})$ is the channel frequency response, and
- $p_k$ is the power associated with the spreading code of the user of rank k.
- $\tilde{y}(k)$ is a standardised complex-valued symbol such that $\tilde{y}(k) = y(k)/\eta$,
- $\lambda$ is a reference complex symbol of QAM constellation associated with the M-QAM modulation,
- $S^{(1)}I,q$ is a partition of the complex plane which brings together all the reference complex symbols having a "1" at the position (I, q),
- $S^{(0)}I,q$ is a partition of the complex plane which brings together all the reference complex symbols having a "0" at the position (I, q),
- $S^{(1)}Q, p$ is a partition of the complex plane which brings together all the reference complex symbols having a "1" at the position (Q, p),
- $S^{(0)}_{Q,p}$ is a partition of the complex plane which brings together all the reference complex symbols having a "0" at the position (Q, p).

4. Method for the soft demapping, by Logarithm of the Likelihood Ratio calculation, of complex-valued symbols (y(1), y(2), ..., y(k), ..., y(K)) corresponding to transmitted complex symbols (a(1), a(2), ..., a(k), ..., a(K)) contained in a signal transmitted by a code division multiple access multi-carrier transmitter and constituted by binary data coded by convolutional coding and quadrature modulated according to a M-QAM modulation, where M is an integer equal to 2a and a is an integer greater than or equal to 2, a complex symbol transmitted a(k) of rank k, k=1, 2, ..., K being spread by a spreading code associated with a user of rank k, the binary data coded by convolutional coding constituting, for the user of rank k, a sequence of bits {bI, 1; bI, 2; ..., bI,q; ..., bI,r; by, 1; bQ,2; ..., bQ, p; ..., bQ, s }, wherein the bit bI, q is the $q^{th}$ bit used to modulate an in-phase part of the transmitted signal and the bit bQ,p is the $p^{th}$ bit used to modulate a quadrature part of the transmitted signal, **characterised in that** it includes a Logarithm of the Likelihood Ratio LRV (bI,q) calculation of the bit bI,q and a Logarithm of the Likelihood Ratio LRV (bQ,p) calculation of the bit bQ,p which use the respective following formulas:

$$\mathrm{LRV\ (bI,q)\ =\ \beta\ x\ M_{I,q}\ ,}$$

with
$M_{I,q} = \tilde{y}_I(k)$ for q = 1, and
$M_{I,q} = -|M_{I,q-1}| + m_{I,q}$ for q > 1,
$\tilde{y}_I(k)$ being the in-phase component of the standardised complex-valued symbol $\tilde{y}(k)$ and $m_{I,q}$ being half the distance between the complex plane partitions $S^{(0)}I, q$ and $S^{(1)}I,q$
and

$$\mathrm{LRV\ (bQ,\ p)\ =\ \beta\ x\ M_{Q,\ p},}$$

with
$M_{Q,p} = \tilde{y}_Q(k)$ for p = 1, and
$M_{Q,p} = -|M_{Q,p-1} + m_{Q,p}$ for p > 1,
$\tilde{y}_Q(k)$ being the quadrature component of the standardised complex symbol $\tilde{y}(k)$ and $m_{Q,p}$ being half the distance between the complex plane partitions $S^{(0)}Q,p$ and $S^{(1)}Q,p$,
with:

- $\beta = \eta^2/V$, where
- $\eta$ is the finite limit, when the total number K of spreading codes and the length N of the spreading codes tend towards infinity and the quantity $\alpha$=K/N is less than or equal to 1, of a random variable $\eta_k$ such that:

$$y(k) = \eta_k\, a(k) + \tau_k,$$

where y(k) is the complex-valued symbol of rank k which corresponds to the transmitted complex symbol a(k) and $\tau_k$ is a random variable representing a noise value produced by multiple access noise and thermal noise filtering,

- V is the finite limit of the variance of the random variable $\tau_k$, β being given by the equation:

$$\beta = p_k \frac{\left(\int_0^1 \left|h\!\left(e^{2i\pi f}\right)\right|^2 df\right)}{\alpha \overline{p}\left(\dfrac{\int_0^1 \left|h\!\left(e^{2i\pi f}\right)\right|^4 df}{\int_0^1 \left|h\!\left(e^{2i\pi f}\right)\right|^2 df} - \int_0^1 \left|h\!\left(e^{2i\pi f}\right)\right|^2 df\right) + \sigma^2}$$

where

- $h(e^{2i\Pi f})$ is the channel frequency response
- p is the mean power associated with all the K spreading codes
- $p_k$ is the power associated with the spreading code of the user of rank k
- $\sigma^2$ is the thermal noise variance.
- $\tilde{y}(k)$ is a standardised complex-valued symbol such that $\tilde{y}(k) = y(k)/\eta$,
- λ is a reference complex symbol of QAM constellation associated with the M-QAM modulation,
- $S^{(1)}I,q$ is a partition of the complex plane which brings together all the reference complex symbols having a "1" at the position (I, q),
- $S^{(0)}I,q$ is a partition of the complex plane which brings together all the reference complex symbols having a "0" at the position (I, q),
- $S^{(1)}Q,p$ is a partition of the complex plane which brings together all the reference complex symbols having a "1" at the position (Q, p),
- $S^{(0)}_{Q,p}$ is a partition of the complex plane which brings together all the reference complex symbols having a "0" at the position (Q, p).

5. Method for the soft demapping, by Logarithm of the Likelihood Ratio calculation, of complex-valued symbols (y(1), y(2), ..., y(k), ..., y(K)) corresponding to transmitted complex symbols (a(1), a(2), ..., a(k), ..., a(K)) contained in a signal transmitted by a code division multiple access multi-carrier transmitter and constituted by binary data coded by convolutional coding and quadrature modulated according to a M-QAM modulation, where M is an integer equal to 2a and a is an integer greater than or equal to 2, a complex symbol transmitted a(k) of rank k, k=1, 2, ..., K being spread by a spreading code associated with a user of rank k, the binary data coded by convolutional coding constituting, for the user of rank k, a sequence of bits {bI, 1; bI, 2; ..., bI,q; ...; bI,r; by, 1; bQ,2; ...; bQ, p; ...; bQ, s }, wherein the bit bI, q is the $q^{th}$ bit used to modulate an in-phase part of the transmitted signal and the bit bQ,p is the $p^{th}$ bit used to modulate a quadrature part of the transmitted signal, **characterised in that** it includes a Logarithm of the Likelihood Ratio LRV (bI,q) calculation of the bit bI,q and a Logarithm of the Likelihood Ratio LRV (bQ,p) calculation of the bit bQ,p which use the respective following formulas:

$$LRV(bI,q) = \beta \times M_{I,q},$$

with $M_{I,q} = \tilde{y}_I(k)$ for q = 1, and
$M_{I,q} = -|M_{I,q-1}| + m_{I,q}$ for q > 1,
$\tilde{y}_I(k)$ being the in-phase component of the standardised complex-valued symbol $\tilde{y}(k)$ and $m_{I,q}$ being half the distance between the complex plane partitions $S^{(0)}I,q$ and $S^{(1)}I,q$
and

$$LRV\ (bQ,\ p)\ =\ \beta\ x\ M_{Q,\ p},$$

with
$M_{Q,p} = \tilde{y}_Q(k)$ for $p = 1$, and
$M_{Q,p} = -|M_{Q,p-1} + m_{Q,p}$ for $p > 1$,
$\tilde{y}_Q(k)$ being the quadrature component of the standardised complex symbol $\tilde{y}(k)$ and $m_{Q,p}$ being half the distance between the complex plane partitions $S^{(0)}Q,p$ and $S^{(1)}Q,p$,
with:

- $\beta = \eta^2/V$, where
- $\eta$ is the finite limit, when the total number K of spreading codes and the length N of the spreading codes tend towards infinity and the quantity $\alpha=K/N$ is less than or equal to 1, of a random variable $\eta_k$ such that:

$$y(k)\ =\ \eta_k\ a(k)\ +\ \tau_k,$$

where y(k) is the complex-valued symbol of rank k which corresponds to the transmitted complex symbol a(k) and $\tau_k$ is a random variable representing a noise value produced by multiple access noise and thermal noise filtering,
- V is the finite limit of the variance of the random variable $\tau_k$, $\beta$ being given by the equation:

$$\beta = \frac{p_k}{\sigma^2} \frac{\left( \int_0^1 \frac{\left| h\!\left( e^{2i\pi f} \right) \right|^2}{\left| h\!\left( e^{2i\pi f} \right) \right|^2 + \frac{\sigma^2}{\alpha \overline{p}}} df \right)}{\int_0^1 \frac{df}{\left| h\!\left( e^{j2\pi f} \right) \right|^2 + \frac{\sigma^2}{\alpha \overline{p}}}}$$

where

- $h(e^{2i\Pi f})$ is the channel frequency response
- p is the mean power associated with all the K spreading codes
- $p_k$ is the power associated with the spreading code of the user of rank k
- $\sigma^2$ is the thermal noise variance.
- y(k) is a standardised complex-valued symbol such that $\tilde{y}(k) = y(k)/\eta$,
- $\lambda$ is a reference complex symbol of QAM constellation associated with the M-QAM modulation,
- $S^{(1)}I,q$ is a partition of the complex plane which brings together all the reference complex symbols having a "1" at the position (I, q),
- $S^{(0)}I,q$ is a partition of the complex plane which brings together all the reference complex symbols having a "0" at the position (I, q),
- $S^{(1)}Q,p$ is a partition of the complex plane which brings together all the reference complex symbols having a "1" at the position (Q, p),
- $S^{(0)}Q,p$ is a partition of the complex plane which brings together all the reference complex symbols having a "0" at the position (Q, p).

6. Method for the soft demapping, by Logarithm of the Likelihood Ratio calculation, of complex-valued symbols (y(1), y(2), ..., y(k), ..., y(K)) corresponding to transmitted complex symbols (a(1), a(2), ..., a(k), ..., a(K)) contained in a signal transmitted by a code division multiple access multi-carrier transmitter and constituted by binary data coded by convolutional coding and quadrature modulated according to a M-QAM modulation, where M is an integer equal to 2a and a is an integer greater than or equal to 2, a complex symbol transmitted a(k) of rank k, k=1, 2, ..., K being spread by a spreading code associated with a user of rank k, the binary data coded by convolutional coding constituting, for the user of rank k, a sequence of bits {bI, 1; bI, 2; ...; bI,q; ...; bI,r; bY, 1; bQ,2; ...; bQ, p; ...; bQ, s }, wherein the bit bI, q is the $q^{th}$ bit used to modulate an in-phase part of the transmitted signal and the bit bQ,p is the $p^{th}$ bit used to modulate a quadrature part of the transmitted signal, **characterised in that** it includes a Logarithm of the Likelihood Ratio LRV (bI,q) calculation of the bit bI,q and a Logarithm of the Likelihood Ratio LRV (bQ,p) calculation of the bit bQ,p which use the respective following formulas:

$$\text{LRV } (bI,q) = \beta \times M_{I,q},$$

with

$M_{I,q} = \tilde{y}_I(k)$ for q = 1, and $M_{I,q} = -|M_{I,q-1}| + m_{I,q}$ for q > 1, $\tilde{y}_I(k)$ being the in-phase component of the standardised complex-valued symbol $\tilde{y}(k)$ and $m_{I,q}$ being half the distance between the complex plane partitions $S^{(0)}I,q$ and $S^{(1)}I,q$ and

$$\text{LRV } (bQ, p) = \beta \times M_{Q, p},$$

with

$M_{Q,p} = \tilde{y}_Q(k)$ for p = 1, and

$M_{Q,p} = -|M_{Q,p-1} + m_{Q,p}$ for p > 1,

$\tilde{y}_Q(k)$ being the quadrature component of the standardised complex symbol $\tilde{y}(k)$ and $m_{Q,p}$ being half the distance between the complex plane partitions $S^{(0)}Q,p$ and $S^{(1)}Q,p$, with:

- $\beta = \eta^2/V$, where
- $\eta$ is the finite limit, when the total number K of spreading codes and the length N of the spreading codes tend towards infinity and the quantity $\alpha=K/N$ is less than or equal to 1, of a random variable $\eta_k$ such that:

$$y(k) = \eta_k \, a(k) + \tau_k,$$

where y(k) is the complex-valued symbol of rank k which corresponds to the transmitted complex symbol a(k) and $\tau_k$ is a random variable representing a noise value produced by multiple access noise and thermal noise filtering,
- V is the finite limit of the variance of the random variable $\tau_k$, $\beta$ being given by the equation:

$$1 = \int_{0}^{1} \frac{1}{\dfrac{\sigma^2}{\left|h\left(e^{j2\pi f}\right)\right|^2} A(\alpha, p_k, \beta) + \alpha.B(\alpha, p_k, \beta)} df$$

with:

$$A(\alpha, p_k, \beta) = (1 - \alpha)\frac{\beta}{p_k} + \alpha.\beta.m(p_k, \beta) \, \beta) =$$

$B(\alpha, p_k, \beta) = 1 - p_k.m(P_k, \beta)$

$$m\left(p_k, \beta\right) = \int_{-\infty}^{+\infty} \frac{\mu_{power}(u)}{p_k + \beta.u} \, du$$

where:

- $\mu_{power}(p)$ is the limit power distribution in relation to the different powers associated with the different spreading codes, when N and K tend towards infinity, $\alpha=K/N$ remaining constant,
- $h(e^{2i\Pi f})$ is the channel frequency response, and
- $p_k$ is the power associated with the spreading code of the user of rank k.
- $y(k)$ is a standardised complex-valued symbol such that $\tilde{y}(k) = y(k)/\eta$,
- $\lambda$ is a reference complex symbol of QAM constellation associated with the M-QAM modulation,
- $S^{(1)}I,q$ is a partition of the complex plane which brings together all the reference complex symbols having a "1" at the position (I, q),
- $S^{(0)}I,q$ is a partition of the complex plane which brings together all the reference complex symbols having a "0" at the position (I, q),
- $S^{(1)}Q,p$ is a partition of the complex plane which brings together all the reference complex symbols having a "1" at the position (Q, p),
- $S^{(0)}Q,p$ is a partition of the complex plane which brings together all the reference complex symbols having a "0" at the position (Q, p).

7. Method for the soft demapping, by Logarithm of the Likelihood Ratio calculation, of complex-valued symbols (y(1), y(2), ..., y(k), ..., y(K)) corresponding to transmitted complex symbols (a(1), a(2), ..., a(k), ..., a(K)) contained in a signal transmitted by a code division multiple access multi-carrier transmitter and constituted by binary data coded by convolutional coding and quadrature modulated according to a M-QAM modulation, where M is an integer equal to 2a and a is an integer greater than or equal to 2, a complex symbol transmitted a(k) of rank k, k=1, 2, ..., K being spread by a spreading code associated with a user of rank k, the binary data coded by convolutional coding constituting, for the user of rank k, a sequence of bits {bI, 1; bI, 2; ..., bI,q; ..., bI,r; by, 1; bQ,2; ..., bQ, p; ..., bQ, s }, wherein the bit bI, q is the $q^{th}$ bit used to modulate an in-phase part of the transmitted signal and the bit bQ,p is the $p^{th}$ bit used to modulate a quadrature part of the transmitted signal, **characterised in that** it includes a Logarithm of the Likelihood Ratio LRV (bI,q) calculation of the bit bI,q and a Logarithm of the Likelihood Ratio LRV (bQ,p) calculation of the bit bQ,p which use the respective following formulas:

$$LRV\ (bI,q)\ =\ (\eta/V)\,Z_{I,q},$$

and

$$LRV\ (bQ,\ p)\ =\ (\eta/V)\,Z_{Q,p},$$

with

$$\eta\ =\ \sqrt{p_k}\int_{0}^{1} \left| h\left(e^{2i\pi f}\right) \right|^2 df$$

where

- $\eta$ is the finite limit, when the total number K of spreading codes and the length N of the spreading codes tend towards infinity and the quantity $\alpha=K/N$ is less than or equal to 1, of a random variable $\eta_k$ such that:

$$y(k) = \eta_k \, a(k) + \tau_k,$$

where y(k) is the complex-valued symbol of rank k which corresponds to the transmitted complex symbol a(k) and $\tau_k$ is a random variable representing a noise value produced by multiple access noise and thermal noise filtering, and

$$V = \alpha\overline{p}\left(\int_0^1 \left|h\left(e^{2i\pi f}\right)\right|^4 df - \left(\int_0^1 \left|h\left(e^{2i\pi f}\right)\right|^2 df\right)^2\right) + \sigma^2 \int_0^1 \left|h\left(e^{2i\pi f}\right)\right|^2 df$$

- V being the finite limit of the variance of the random variable $\tau_k$,
where

- $h(e^{2i\Pi\Pi f})$ is the channel frequency response
- $p_k$ is the power associated with the spreading code of the user of rank k
- p is the mean power associated with all the K spreading codes
- $\sigma^2$ is the thermal noise variance
- $Z_{I,q} = Y_I$ for q = 1, where $Y_I$ is the in-phase component of the complex-valued symbol Y(k),
- $Z_{I,q} = -|Z_{I,q-1}| + \eta x m_{I,q}$ for q > 1, where $m_{I,q}$ is half the distance between partitions of the complex plane $S^{(1)}I,q$ and $S^{(0)}I,q$ such that
- $S^{(1)}I,q$ is a partition of the complex plane which brings together all the reference complex symbols having a "1" at the position (I, q),
- $S^{(0)}I,q$ is a partition of the complex plane which brings together all the reference complex symbols having a "0" at the position (I, q),

- $Z_{Q,p} = Y_Q$ for p = 1, where $Y_Q$ is the quadrature component of the complex-valued symbol Y(k),
- $Z_{Q,p} = -|Z_{Q,p-1}| + \eta x m_{Q,p}$ for p > 1, where $m_{Q,p}$ is half the distance between partitions of the complex plane $S^{(1)}Q, p$ and $S^{(0)}Q,p$, such that
- $S^{(1)}Q, p$ is a partition of the complex plane which brings together all the reference complex symbols having a "1" at the position (Q, p),
- $S^{(0)}Q,p$ is a partition of the complex plane which brings together all the reference complex symbols having a "0" at the position (Q, p).

8. Method for the soft demapping, by Logarithm of the Likelihood Ratio calculation, of complex-valued symbols (y(1), y(2), ..., y(k), ..., y(K)) corresponding to transmitted complex symbols (a(1), a(2), ..., a(k), ..., a(K)) contained in a signal transmitted by a code division multiple access multi-carrier transmitter and constituted by binary data coded by convolutional coding and quadrature modulated according to a M-QAM modulation, where M is an integer equal to $2^m$ and m is an integer greater than or equal to 1, a complex symbol transmitted a (k) of rank k, k=1, 2, ..., K being spread by a spreading code associated with a user of rank k, the binary data coded by convolutional coding constituting, for the user of rank k, a sequence of bits {bI, 1; bI, 2; ...; bI,q; ...; bI,r; by, 1; bQ,2; ...; bQ, p; ...; bQ, s }, wherein the bit bI, q is the $q^{th}$ bit used to modulate an in-phase part of the transmitted signal and the bit bQ,p is the $p^{th}$ bit used to modulate a quadrature part of the transmitted signal, **characterised in that** it includes a Logarithm of the Likelihood Ratio LRV (bI,q) calculation of the bit bI,q and a Logarithm of the Likelihood Ratio LRV (bQ,p) calculation of the bit bQ,p which use the respective following formulas:

$$LRV(bI,q) = (\eta/V) Z_{I,q},$$

and

$$\text{LRV } (bQ, \; p) \; = \; (\eta/V) Z_{Q,p},$$

with

$$\eta = \int_0^1 \frac{\left|h\left(e^{2i\pi f}\right)\right|^2}{\left|h\left(e^{2i\pi f}\right)\right|^2 + \dfrac{\sigma^2}{\alpha \overline{p}}} df$$

where

- $\eta$ is the finite limit, when the total number K of spreading codes and the length N of the spreading codes tend towards infinity and the quantity $\alpha$=K/N is less than or equal to 1, of a random variable $\eta_k$ such that:

$$y(k) \; = \; \eta_k \; a(k) \; + \; \tau_k,$$

where y(k) is the complex-valued symbol of rank k which corresponds to the transmitted complex symbol a(k) and $\tau_k$ is a random variable representing a noise value produced by multiple access noise and thermal noise filtering, and

$$V = \alpha \overline{p} \eta (1 - \eta)$$

- V being the finite limit of the variance of the random variable $\tau_k$,

where

- $h(e^{2i\Pi f})$ is the channel frequency response
- p is the mean power associated with all the K spreading codes
- $\sigma^2$ is the thermal noise variance.
- $Z_{I,q} = Y_I$ for q = 1, where $Y_I$ is the in-phase component of the complex-valued symbol Y(k),
- $Z_{I,q}$=-$|Z_{I,q-1}|+\eta x m_{I,q}$ for q > 1, where $m_{I,q}$ is half the distance between partitions of the complex plane $S^{(1)}I,q$ and $S^{(0)}I,q$ such that
- $S^{(1)}I,q$ is a partition of the complex plane which brings together all the reference complex symbols having a "1" at the position (I, q),
- $S^{(0)}I,q$ is a partition of the complex plane which brings together all the reference complex symbols having a "0" at the position (I, q),
- $Z_{Q,p} = Y_Q$ for p = 1, where $Y_Q$ is the quadrature component of the complex-valued symbol Y(k),
- $Z_{Q,p}$ =-$|Z_{Q,p-1}|+\eta x m_{Q,p}$ for p > 1, where $m_{Q,p}$ is half the distance between partitions of the complex plane $S^{(1)}Q,$ p and $S^{(0)}Q,p$, such that

  - $S^{(1)}Q,$ p is a partition of the complex plane which brings together all the reference complex symbols having a "1" at the position (Q, p),
  - $S^{(0)}Q,p$ is a partition of the complex plane which brings together all the reference complex symbols having a "0" at the position (Q, p).

9. Method for decoding complex-valued symbols (y(1), y(2), ..., y(k), ..., y(K)) including a stage of soft demapping by calculation of a Logarithm of the Likelihood Ratio (LRV) and a stage of decoding by a soft input decoding algorithm in order to calculate, from the Logarithm of the Likelihood Ratio (LRV), a sequence of bits corresponding, bit to bit, to a sequence of bits coded by convolutional coding, **characterised in that** the soft demapping stage is implemented by a method according to any one of the claims 1 to 8.

**10.** Decoding method according to claim 9, **characterised in that** the soft input decoding algorithm is the soft input Viterbi algorithm.

**11.** Decoding method according to claim 10, **characterised in that** the convolutional coding is convolutional turbo-coding and **in that** the soft input decoding algorithm is the soft input and output Viterbi algorithm which uses a maximum likelihood criterion or the a posteriori maximisation of probability algorithm which uses an a posteriori maximum criterion.

FIG. 1

FIG. 2

EP 1 856 870 B1

FIG. 3

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **STEFAN KAISER.** OFDM Code Division Multiplexing in Fading Channels. *IEEE Transactions On Communication,* Août 2002, vol. 50 (8
- **P. LOUBATON.** Asymptotic distribution of large random matrices and performance of large CDMA systems. *Proceedings, Seventh ISSPA Conf.,* 01 Juillet 2003, vol. 2, 205-214
- **M. DEBBAH.** Linear Precoders for OFDM Wireless Communications. *PhD Thesis, Université de Marne la Vallée,* Octobre 2002
- **W. HACHEM.** ''Simple polynomial MMSE Receivers for CDMA Transmission on frequency Selective Channels. *IEEE Transactions on Information Theory,* Juillet 2002, http://www.supelec.fr/ecole/radio/hachem.html
- **J.M. CHAUFRAY ; W. HACHEM ; PH. LOUBATON.** Asymptotic Analysis of Optimum and SubOptimum CDMA Downlink MMSE Receivers. *soumis à la conférence ISIT,* 2002, http://syscom.univ-mlv.fr/loubaton/index.html
- **P. JALLON ; M. DES NOÉS ; D. KTÉNAS ; J.M BROSSIER.** Asymptotical Analysis of the Multiuser MMSE Receiver for the downlink of a MC-CDMA system. VTC Spring, 2003
- **F. TOSATO ; P. BISAGLIA.** Simplified Soft-Output Demapper for Binary Interleaved COFDM with Application to HIPERLAN/2. IEEE International Conference on Communications 1CC, 2002, vol. 2, 664-668